(19)

**Europäisches Patentamt**
**European Patent Office**
**Office européen des brevets**

(11)     **EP 1 949 048 B1**

(12)                **EUROPÄISCHE PATENTSCHRIFT**

(45) Veröffentlichungstag und Bekanntmachung des
Hinweises auf die Patenterteilung:
**21.09.2016   Patentblatt 2016/38**

(51) Int Cl.:
*G01F 1/84* (2006.01)          *G01N 9/00* (2006.01)

(21) Anmeldenummer: **06829988.2**

(22) Anmeldetag: **14.11.2006**

(86) Internationale Anmeldenummer:
**PCT/EP2006/068429**

(87) Internationale Veröffentlichungsnummer:
**WO 2007/057385 (24.05.2007 Gazette 2007/21)**

(54) **MESSWANDLER VOM VIBRATIONSTYP**

VIBRATION-TYPE MEASURING TRANSDUCER

CONVERTISSEUR DE MESURE DU TYPE A VIBRATIONS

(84) Benannte Vertragsstaaten:
**AT BE BG CH CY CZ DE DK EE ES FI FR GB GR
HU IE IS IT LI LT LU LV MC NL PL PT RO SE SI
SK TR**

(30) Priorität: **15.11.2005   DE 102005054855
07.12.2005   DE 102005058593**

(43) Veröffentlichungstag der Anmeldung:
**30.07.2008   Patentblatt 2008/31**

(73) Patentinhaber: **Endress+Hauser Flowtec AG
4153 Reinach (CH)**

(72) Erfinder:
• **BITTO, Ennio
CH-4147 Aesch (CH)**
• **ECKERT, Gerhard
79618 Rheinfelden (DE)**
• **LORENZ, Rainer
79540 Lörrach (DE)**

• **DRAHM, Wolfgang
85435 Erding (DE)**
• **RIEDER, Alfred
84032 Landshut (DE)**
• **ANKLIN-IMHOF, Martin
CH-4143 Dornach (CH)**
• **FUCHS, Michael
79427 Eschbach (DE)**
• **SCHÜTZE, Christian
CH-4055 Basel (CH)**
• **PROBST, Leonhard
CH-4143 Dornach (CH)**

(74) Vertreter: **Andres, Angelika Maria
Endress+Hauser (Deutschland) AG+Co. KG
PatServe
Colmarer Strasse 6
79576 Weil am Rhein (DE)**

(56) Entgegenhaltungen:
**EP-A- 0 985 913          EP-A- 1 253 408
DE-A1- 10 235 322     US-A1- 2002 152 819**

**Beschreibung**

Die Erfindung betrifft einen, insb. für eine Verwendung in einem Coriolis-Massedurchflußmesser geeigneten, Meßwandler vom Vibrationstyp.

Zur Ermittlung eines Massedurchflusses eines in einer Rohrleitung strömenden Mediums, insb. einer Flüssigkeit, werden oftmals solche Meßgeräte verwender, die mittels eines Meßwandlers vom Vibrationstyp und einer daran angeschlossener Steuer- und Auswerteelektronik, im Medium Corioliskräfte bewirken und von diesen abgeleitet ein den Massedurchfluß repräsentierendes Meßsignal erzeugen.

Derartige Coriolis-Massedurchflußmesser sind seit langem bekannt und haben sich gleichermaßen im industriellen Einsatz etabliert. So sind z.B. in der EP-A 317 340, der US-A 53 98 554, der US-A 54 76 013, der US-A 55 31 126, der US-A 56 91 485, US-A 57 05 754, der US-A 57 96 012, der US-A 59 45 609, der US-A 59 79 246, der US-A 60 06 609, der US-B 63 97 685, der US-B 66 91 583, der US-B 68 40 109, der WO A 99 51 946, WO- A 99 40 394 oder der WO- A 00 14 485, Coriolis- Massedurchflußmesser mit jeweils einem Meßwandler vom Vibrationstyp beschrieben. Jeder der gezeigten Meßwandler umfaßt ein einziges gerades, im Betrieb vibrierendes Meßrohr zum Führen des Mediums, welches Meßrohr über ein einlaßseitig einmündendes Einlaßrohrstück und über ein auslaßseitig einmündendes Auslaßrohrstück mit der Rohrleitung kommuniziert, sowie eine Erregeranordnung, die das Meßrohr im Betrieb zu Biegeschwingungen in einer Rohrebene anregt, und eine Sensoranordnung zum punktuellen Erfassen einlaßseitiger und auslaßseitiger Schwingungen des Meßrohrs.

Gerade Meßrohre bewirken bekanntlich, zu Biegeschwingungen gemäß einer ersten Eigenschwingungsform angelegt im hindurchströmenden Medium Corioliskräfte. Diese wiederum führen dazu, daß den angeregten Biegeschwingungen koplanare Biegeschwingungen gemäß einer zweiten Eigenschwingungsform von höherer und/ oder niederer Ordnung überlagert werden und dementsprechend die mittels der Sensoranordnung einlaßseitig und auslaßseitig erfaßten Schwingungen eine auch vom Massedurchfluß abhängige, meßbare Phasendifferenz aufweisen.

Üblicherweise werden die Meßrohre derartiger, z.B. in Coriolis- Massedurchflußmessern eingesetzten, Meßwandler im Betrieb auf einer momentanen Resonanzfrequenz der ersten Eigenschwingungsform, insb. bei konstantgeregelter Schwingungsamplitude, angeregt. Da diese Resonanzfrequenz insb. auch von der momentanen Dichte des Mediums abhängig ist, kann mittels marktüblicher Coriolis- Massedurchflußmesser neben dem Massedurchfluß auch die Dichte von strömenden Mediumen gemessen werden.

Ein Vorteil gerader Meßrohre besteht z.B. darin, daß sie praktisch in jeder beliebigen Einbaulage, insb. auch nach einer in-line durchgeführten Reinigung, mit hoher Sicherheit rückstandslos entleert werden können. Ferner sind solche Meßrohre im Vergleich z.B. zu einem omegaförmig oder helixförmig gebogenem Meßrohr wesentlich einfacher und dementsprechend kostengünstiger herzustellen. Ein weiterer Vorteil eines in der oben beschriebenen Weise vibrierenden, geraden Meßrohrs ist im Vergleich zu gebogenen Meßrohren z.B. auch darin zu sehen, daß im Meßbetrieb via Meßrohr praktisch keine Torsionsschwingungen in der angeschlossenen Rohrleitung hervorgerufen werden.

Demgegenüber besteht ein wesentlicher Nachteil vorbeschriebener Meßwandler darin, daß aufgrund wechselseitiger lateraler Auslenkungen des vibrierenden einzigen Meßrohrs gleichfrequent oszillierende Querkräfte auf die Rohrleitung wirken können, und daß diese Querkräfte bisher nur sehr begrenzt und nur mit einem sehr hohen technischen Aufwand kompensiert werden können.

Zur Verbesserung der dynamischen Balance des Meßwandlers, insb. zur Reduzierung solcher durch das vibrierende einzige Meßrohr erzeugten, einlaßseitig und auslaßseitig auf die Rohrleitung einwirkenden Querkräften, umfassen die in der EP-A 317 340, der US-A 53 98 554, der US-A 55 31 126, der US-A 56 91 485, der US-A 57 96 012, US-A 59 79 246, US-A 60 06 609, der US-B 63 97 685, der US-B 66 91 583, der US-B 68 40 109 oder der WO- A 00 14 485 gezeigten Meßwandler jeweils wenigstens einen einstückigen oder mehrteilig ausgeführten Gegenschwinger, der unter Bildung einer ersten Kopplungszone einlaßseitig am Meßrohr fixiert ist und der unter Bildung einer zweiten Kopplungszone auslaßseitig am Meßrohr fixiert ist. Derartige balkenförmig, insb. rohrförmig oder als mit dem Meßrohr fluchtendes Körperpendel realisierte Gegenschwinger schwingen im Betrieb zum jeweiligen Meßrohr außer Phase, insb. gegenphasig, wodurch die Wirkung der durch Meßrohr und Gegenschwinger jeweils hervorgerufenen seitlichen Querkräfte und/oder Querimpulse auf die Rohrleitung minimiert und ggf. auch völlig unterdrückt werden können.

Solche Meßwandler mit einzigem Meßrohr und Gegenschwinger haben sich insb. bei solchen Anwendungen bewährt, bei denen das zu messende Medium eine im wesentlich konstante oder nur in einem sehr geringen Maße veränderliche Dichte aufweist, also bei solchen Anwendungen, bei denen eine auf die angeschlossene Rohrleitung wirkende Resultierende aus den vom Meßrohr erzeugten Querkräften und vom Gegenschwinger erzeugten Gegenkräften vorab ohne weiteres auf Null fest eingestellt werden kann. Demgegenüber weisen solche Meßwandler, insb. gemäß der US-A 55 31 126 oder der US-A 59 69 265, bei Anwendung für Mediumen mit in einem weiten Bereich schwankender Dichte, z.B. verschiedenen, aufeinanderfolgend zu messenden Mediumen, wenn auch in geringerem Maße, praktisch den gleichen Nachteil wie Meßwandler ohne Gegenschwinger auf, da vorgenannte Resultierende auch von der Dichte des Mediums abhängig sind und somit in erheblichem Maße von Null verschieden sein können. Anders gesagt, auch durch zumindest das Meßrohr und den Gegenschwinger gebildetes Innenteil des Meßwandlers wird im Betrieb aufgrund von dichteabhängigen Unbalancen und damit einhergehenden Querkräften aus einer zugewiesenen statischen Ruhelage global ausgelenkt.

Ein Möglichkeit zur Reduzierung von dichteabhängigen Querkräften ist z.B. in der US-A 52 87 754, der US-A 57 05 754, der US-A 57 96 010 oder der US-B 69 48 379 beschrieben. Bei den dort gezeigten Meßwandlern werden die seitens des vibrierenden einzigen Meßrohrs erzeugten, eher mittel- oder hochfrequent oszillierenden Querkräfte mittels eines im Vergleich zum Meßrohr sehr schweren Gegenschwingers und ggf. einer relativ weichen Ankopplung des Meßrohrs an die Rohrleitung, also praktisch mittels eines mechanischen Tiefpasses, von der Rohrleitung, fern gehalten. Ein großer Nachteil eines solchen Meßwandlers besteht u.a. aber darin, daß die zur Erzielung einer ausreichend robusten Dämpfung erforderliche Masse des Gegenschwingers überproportional mit Nennweite des Meßrohrs steigt. Umgekehrt ist bei Verwendung eines solch massiger Gegenschwingers aber auch sicherzustellen, daß eine mit zunehmender Masse immer niedriger werdende minimale Eigenfrequenz des Meßwandlers nach wie vor weitab von den ebenfalls sehr niedrigen Eigenfrequenzen der angeschlossenen Rohrleitung liegt.

Verschieden Weiterführende Möglichkeiten zur Reduzierung der dichteabhängigen Querkräfte, sind z.B. in der US-A 59 79 246, der US-B 63 97 685, der US-B 66 91 583, der US-B 68 40 109, der WO- A 99 40 394 oder in der WO- A 00 14 485 vorgeschlagen. Bei den gezeigten Kompensationsmechanismen geht im Kern darum, eine Bandbreite, innerhalb der Gegenschwinger und Ausleger wirksam sind, durch ein geeignetes Zusammenspiel der einzelnen Komponenten des Innenteils des Meßwandlers zu erweitern.

Im besonderen ist in der US-B 63 97 685 ein Meßwandler der vorgenannten Art bekannt, bei dem als massenmäßige Ausgleichsmaßnahme für die Anregungs-Schwingung eine erste Ausgleichsmasse vorgesehen und in der senkrecht zur Längsachse stehenden Mittelebene des Kompensationszylinders mit diesem verbunden ist und als massenmäßige Ausgleichsmaßnahme für die Coriolis-Schwingung eine zweite Ausgleichsmasse und eine dritte Ausgleichsmasse vorgesehen sind und die zweite Ausgleichsmasse und die dritte Ausgleichsmasse als endseitige Bereiche des Gegenschwingers ausgebildet sind. Auf diese Weise soll erreicht werden, daß das aus dem Coriolis-Meßrohr und dem Kompensationszylinder bestehende schwingungsfähige System sowohl für die Anregungs-Schwingungen des Coriolis-Meßrohres als auch für die Coriolis-Schwingungen des Coriolis-Meßrohres massenmäßig zumindest weitestgehend ausgeglichen ist.

Aus der WO-A 00 14 485 ist ferner ein Meßwandler vom Vibrationstyp für ein in einer Rohrleitung strömendes Medium beschrieben, bei dem ein einlaßseitiger erster Ausleger, der im Bereich einer zwischen der ersten und zweiten Kopplungszone liegenden dritten Kopplungszone mit dem Meßrohr gekoppelt ist, und der einen im Bereich des Meßrohrs liegenden Massenschwerpunkt aufweist, sowie ein auslaßseitiger zweiter Ausleger, der im Bereich einer zwischen der ersten und zweiten Kopplungszone liegenden vierten Kopplungszone mit dem Meßrohr gekoppelt ist, und der einen im Bereich des Meßrohrs liegenden Massenschwerpunkt aufweist, vorgesehen sind. Jeder der beiden Ausleger ist dafür vorgesehen, Ausgleichsschwingungen auszuführen, die so ausgebildet sind, daß die Querimpulse kompensiert werden und somit ein Massenmittelpunkt eines aus Meßrohr, Erregeranordnung, Sensoranordnung und den beiden Auslegern gebildeten Innenteils ortsfest gehalten wird. Ferner ist in der WO-A 99 40 394 ein Meßwandler der vorgenannten Art beschrieben, bei dem ein dem Erzeugen von den Querkräften einlaßseitig entgegenwirkenden Gegenkräften dienender erster Ausleger sowie ein dem Erzeugen von den Querkräften auslaßseitig entgegenwirkenden Gegenkräften dienender zweiter Ausleger vorgesehen sind. Dabei sind der erste Ausleger sowohl im Bereich der ersten Kopplungszone am Meßrohr als auch einlaßseitig am Wandlergehäuse und der zweite Ausleger sowohl im Bereich der zweiten Kopplungszone am Meßrohr als auch auslaßseitig am Wandlergehäuse fixiert, so daß die Gegenkräfte so ausgebildet sind, daß das Meßrohr trotz der erzeugten Querkräften in einer zugewiesenen statischen Ruhelage festgehalten wird.

Bei vorgenannten Meßwandlern, einschließlich den in der US-A 59 79 246 beschriebenen, wird das Problem von dichteabhängigen Unbalancen im Prinzip dadurch gelöst, daß ein Amplitudengang des Gegenschwingers, insb. durch amplitudenabhängig veränderliche Federsteifigkeiten des Gegenschwingers, vorab und/oder im Betrieb derart an die Meßrohrschwingungen angepaßt wird, daß die von Meßrohr und Gegenschwinger erzeugten Kräfte einander im wesentlichen kompensieren.

Schließlich sind in der US-B 66 91 583 und der US-B 68 40 109 jeweils Meßwandler gezeigt, bei denen jeweils ein im Bereich der ersten Kopplungszone im wesentlichen starr an Meßrohr, Gegenschwinger und Einlaßrohrstück fixierter erster Ausleger und ein im Bereich der zweiten Kopplungszone im wesentlichen starr an Meßrohr, Gegenschwinger und Auslaßrohrstück fixierter zweiter Ausleger vorgesehen sind.

Die beiden, insb. symmetrisch zur Mitte des Meßrohrs angeordneten, Ausleger dienen hier dazu, im Ein- bzw. Auslaßrohrstück dynamisch Biegemomente zu erzeugen, wenn das vibrierende Meßrohr zusammen mit dem Gegenschwinger und insoweit auch die beiden Kopplungszonen aus ihrer jeweils zugewiesenen statischen Ruhelage lateral verschoben werden, wobei die Biegemomente so ausgebildet sind, daß im sich verformenden Einlaßrohrstück und im sich verformenden Auslaßrohrstück Impulse erzeugt werden, die den im vibrierenden Meßrohr erzeugten Querimpulsen entgegengerichtet sind. Die beiden Ausleger sind dafür so ausgebildet und im Meßwandler so anbeordnet daß ein im Bereich des Einlaßrohrstücks liegender Massenschwerpunkt des ersten Auslegers und ein im Bereich des Auslaßrohrstücks liegender Massenschweipunkt des zweiten Auslegers, trotzdem das Meßrohr aus seiner zugewiesenen statischen Ruhelage lateral verschoben ist, im wesentlichen ortsfest in einer statischen Ruhelage verbleibt. Das Grundprinzip dieses Kompensationsmechanismus besteht darin, eher störend auf die Messungen und/oder die angeschlossene Rohrleitung wirkende laterale Verschiebebewegungen des vibrierenden Meßrohrs, die dessen primären, die Meßeffekte bewirkenden Verformungen überlagert sind, in den Meßwandler dynamisch ausbalancierende, gegenläufige Verformungen des Ein- und Auslaßrohrstücks umzuwandeln und so weitgehend zu eliminieren. Durch eine geeignete Abstimmung des Innenteils können die Verformungen von Ein- und Auslaßrohrstück so ausgebildet werden, daß die Querimpulse weitgehend unabhängig von momentanen Schwingungsamplituden und/ oder -frequenzen des Meßrohrs einander kompensieren. In entsprechender Weise können somit auch die durch das vibrierende Meßrohr erzeugten Querkräfte mittels vom sich verformenden Einlaßrohrstück und vom sich verformenden Auslaßrohrstück erzeugter Querkräfte im wesentlichen kompensiert werden.

Weiterführende Untersuchungen haben jedoch geneigt daß, obwohl mit dem in der US-B 66 91 583 und der US-B 68 40 109 vorgeschlagene Entkopplungsmechanismus prinzipiell sehr gute Ergebnisse hinsichtlich der Störfestigkeit erzielbar sind, mit den dort gezeigten Konfigurationen für bestimmte Applikationen, insb. in solchen mit innerhalb sehr weiten Bereichen schwankender Mediumsdichte, trotzdem zu geringe Bandbreite für den Entkopplungsmechanismus und insoweit nicht zufriedenstellende Ergebnisse hinsichtlich der Störfestigkeit des Meßwandlers zu verzeichnen sind. Allerdings konnte des weiteren festgestellt werden, daß mit der in der US-A 52 87 754, der US-A 57 05 754, der US-A 57 96 010 oder der US-B 69 48 379 vorgeschlagenen Verwendung eines vergleichsweise schweren Gegenschwingers allein keine deutlichen Verbesserungen für den in der US-B 66 91 583 und der US-B 68 40 109 vorgestellten Entkopplungsmechanismus erzielbar sind.

EP-A 1 253 408, US-B 66 91 583 und DE-A 102 35 322 offenbaren Messwandler gemäß dem Oberbegriff von Anspruch 1.

Ein Aufgabe der Erfindung besteht daher darin, einen, insb. für einen Coriolis Massedurchflußmesser oder auch für einen Coriolis-Massendurchfluß/Dichtemesser geeigneten, Meßwandler der vorgenannten Art anzugeben, der im Betrieb über einen weiten Mediumsdichtebereich dynamisch gut ausbalanciert ist und bei dem sowohl Meßrohr als auch Gegenschwinger der trotzdem von vergleichsweise geringer Masse sein können.

Zur Lösung der Aufgabe besteht die Erfindung in einem Meßwandler vom Vibrationstyp für ein in einer Rohrleitung strömendes gemäß Anspruch 1.

Erfindungsgemäß ist vorgesehen, daß jeder der beiden Ausleger eine Masse aufweist, die mindestens gleich der Masse des Gegenschwingers ist.

Nach einer Ausgestaltung der Erfindung ist vorgesehen, daß jeder der beiden Ausleger eine Masse aufweist, die größer ist als ein 1,5-faches der Masse des Gegenschwingers. Nach einer Weiterbildung der Erfindung ist vorgesehen, daß jeder der beiden Ausleger eine Masse aufweist, die kleiner ist als ein 5-faches der Masse des Gegenschwingers, insb. nicht größer als ein 3-faches der Masse des Gegenschwingers ist.

Erfindungsgemäß ist vorgesehen, daß die Masse des Gegenschwingers mindest einem 5-fachen der Masse des Meßrohrs entspricht.

Erfindungsgemäß ist vorgesehen, daß jeder der beiden Ausleger eine Masse aufweist, die mindestens einem 10-fachen der Masse des Meßrohrs entspricht.

Nach einer Ausgestaltung der Erfindung ist vorgesehen, daß eine Länge der Ausleger höchsten einem 0,9-fachen einer Länge des Einlaßrohrstücks oder des Auslaßrohrstücks entspricht.

Nach einer Ausgestaltung der Erfindung ist vorgesehen, daß jeder der beiden Ausleger im wesentlichen röhrenförmig oder hülsenförmig ausgebildet ist. Nach einer Weiterbildung dieser Ausgestaltung ist ferner vorgesehen, daß jeder der Ausleger eine größte Wandstärke aufweist, die größer als eine größte Wandstärke des Gegenschwingers ist. Ferner ist vorgesehen, daß jeder der Ausleger eine kleinste Wandstärke aufweist, die größer als eine größte Wandstärke des Gegenschwingers ist.

Nach einer Ausgestaltung der Erfindung ist vorgesehen, daß Meßrohr, Einlaßrohrstück und dem Auslaßrohrstück jeweils durch Segmente eines einzigen, einstückigen Rohres gebildet sind.

Nach einer Ausgestaltung der Erfindung ist vorgesehen, daß das Meßrohr im wesentlichen gerade ist. Nach einer Weiterbildung dieser Ausgestaltung der Erfindung ist ferner vorgesehen, daß der Gegenschwinger ebenfalls gerade ist und daß das Meßrohr und Gegenschwinger zueinander im wesentlichen koaxial ausgerichtet sind. Nach einer anderen Weiterbildung dieser Ausgestaltung der Erfindung ist ferner vorgesehen, daß jeder der Ausleger eine Länge aufweist, die höchstens einem 0,5-fachen einer Länge des Meßrohrs entspricht. Insbesondere ist weist jeder der Ausleger dabei eine Länge auf, die kleiner als ein 0,4-faches einer Länge des Meßrohrs ist.

Nach einer Ausgestaltung der Erfindung ist vorgesehen, daß das Meßrohr zumindest teilweise vom Gegenschwinger ummantelt ist.

Nach einer Ausgestaltung der Erfindung ist vorgesehen, daß auch der Gegenschwinger rohrförmig ist.

Nach einer Ausgestaltung der Erfindung ist vorgesehen, daß der Gegenschwinger einen Innen-Durchmesser von mehr als 50 mm und/oder eine Wandstärke von mehr als 5 mm aufweist.

Nach einer Ausgestaltung der Erfindung ist vorgesehen, daß das Einlaßrohrstück und Auslaßrohrstück im wesentlichen gerade sind. Nach einer Weiterbildung dieser Ausgestaltung der Erfindung ist ferner vorgesehen, daß Einlaßrohrstück und Auslaßrohrstück zueinander sowie zu einer die beiden Kopplungszonen imaginär verbindenden Längsachse des Meßwandlers im wesentlichen fluchtend ausgerichtet sind. Nach einer anderen Weiterbildung dieser Ausgestaltung der Erfindung führt das Meßrohr im Betrieb zumindest zeitweise Biegeschwingungen um eine mit der Längsachse im wesentlichen parallelen, insb. koinzidierenden, Biegeschwingungsachse aus. Ferner kann vorgesehen sein, daß das Meßrohr im Betrieb zumindest zeitweise Torsionsschwingungen um eine mit der Längsachse im wesentlichen parallelen, insb. koinzidierenden, Torsionsschwingungsachse ausführt.

Nach einer Ausgestaltung der Erfindung ist vorgesehen, daß eine Länge des Einlaßrohrstücks sowie eine Länge des Auslaßrohrstücks jeweils höchstens einem 0,5-fachen einer Länge des Meßrohrs entspricht. Nach einer Weiterbildung dieser Ausgestaltung der Erfindung ist ferner vorgesehen, daß sowohl das Einlaßrohrstück eine Länge als auch das Auslaßrohrstück eine Länge aufweisen, die jeweils kleiner als ein 0,4-faches einer Länge des Meßrohrs ist.

Nach einer anderen Weiterbildung dieser Ausgestaltung der Erfindung ist vorgesehen, daß das Meßrohr im Betrieb zumindest zeitweise mit einer Schwingungsfrequenz vibriert, die unter Berücksichtigung einer Länge des Einlaßrohrstücks sowie einer Biegesteifigkeit des Einlaßrohstücks größer ist als $\dfrac{1}{2\pi} \cdot \sqrt{\dfrac{12 \cdot E_{11} \cdot I_{11}/L_{11}^3}{m_{15}}}$, worin $L_{11}$ die Länge des Einlaßrohrstücks $m_{15}$ die Masse des ersten Auslegers und $E_{11} I_{11}$ eine Biegesteifigkeit des Einlaßrohstücks repräsentiert, die durch Elastizitätsmodul $E_{11}$ des Materials des Einlaßrohrstücks sowie eines axialen Flächenträgheitsmoment $I_{11}$ des Einlaßrohrstücks bestimmt ist. Ferner ist, daß das auch das mit Wasser befüllte Meßrohr eine niedrigste natürliche Eigenfrequenz aufweist, die größer ist als

$$\frac{1}{2\pi} \cdot \sqrt{\frac{12 \cdot E_{11} \cdot I_{11}/L_{11}^3}{m_{15}}} \cdot$$

Nach einer Ausgestaltung der Erfindung ist vorgesehen, daß das leere Meßrohr eine niedrigste natürliche Eigenfrequenz aufweist, die größer oder etwa gleich einer niedrigsten natürlichen Eigenfrequenz des Gegenschwingers ist. Nach einer Weiterbildung dieser Ausgestaltung der Erfindung ist ferner vorgesehen, daß eine niedrigste natürliche Eigenfrequenz auch des mit Wasser gefüllten Meßrohrs mindestens einem 1,1-fachen einer niedrigsten natürlichen Eigenfrequenz des Gegenschwingers entspricht.

Nach einer Ausgestaltung der Erfindung ist vorgesehen, daß Einlaßrohrstück, Auslaßrohrstück und Meßrohr im wesentlichen gerade sind, und daß eine Länge des Einlaßrohrstücks sowie eine Länge des Auslaßrohrstücks jeweils höchstens einem 0,5-fachen einer Länge des Meßrohrs entspricht. Nach einer Weiterbildung dieser Ausgestaltung der Erfindung ist ferner vorgesehen, daß sowohl das Einlaßrohrstück eine Länge als auch das Auslaßrohrstück eine Länge aufweisen, die jeweils kleiner als ein 0,4-faches einer Länge des Meßrohrs ist.

Nach einer Ausgestaltung der Erfindung ist vorgesehen, daß ein Verhältnis eines ersten Massenträgheitsmoment des ersten Auslegers um eine in der ersten Kopplungszone liegende imaginäre erste Drehachse des ersten Auslegers zu einem zweiten Massenträgheitsmoment des ersten Auslegers um eine zur Meßrohrlängsachse im wesentlichen parallele imaginäre zweite Drehachse des ersten Auslegers kleiner als 5, insb. kleiner als 2 ist. Zudem ist vorgesehen, daß auch ein Verhältnis eines ersten Massenträgheitsmoment des zweiten Auslegers um eine in der zweiten Kopplungszone liegende, zur ersten Drehachse des ersten Auslegers im wesentlichen parallele imaginäre erste Drehachse des zweiten Auslegers zu einem zweiten Massenträgheitsmoment des zweiten Auslegers um eine zur Meßrohrlängsachse im wesentlichen parallele imaginäre zweite Drehachse des zweiten Auslegers kleiner als 5, insb. kleiner als 2 ist. Ferner ist vorgesehen, daß jedes der beiden ersten Massenträgheitsmomente mindestens $0,01\ \text{kg} \cdot \text{m}^2$ und/oder daß jedes der beiden zweiten Massenträgheitsmomente mindestens $0,01\ \text{kg} \cdot \text{m}^2$ beträgt. Nach einer anderen Weiterbildung dieser Ausgestaltung der Erfindung ist ferner vorgesehen, daß ein Quotient des ersten Massenträgheitsmoments eines jeden Auslegers zu dessen jeweiliger Masse kleiner als $0,03\ \text{m}^2$ ist, insb. in einem Bereich zwischen $0,001\ \text{m}^2$ und $0,01\ \text{m}^2$ liegt. Ferner ist vorgesehen daß ein Verhältnis dieses vorgenannten Quotienten des jeweiligen Auslegers zu einer Querschnittsfläche des Meßrohrs kleiner als 10 ist. Im besonderen ist dabei vorgesehen jeden der beiden Ausleger so auszuführen, daß dieses vorgenannte Verhältnis zwischen 0,5 und liegt.

Nach einer Ausgestaltung der Erfindung ist vorgesehen, daß jeder der Ausleger zumindest anteilig unmittelbar am Gegenschwinger fixiert ist.

Nach einer Ausgestaltung der Erfindung ist vorgesehen, daß jeder der Ausleger wenigstens eine Längsnut aufweist.

Nach einer Ausgestaltung der Erfindung ist vorgesehen, daß jeder der Ausleger mittels Schraubverbindungen am Gegenschwinger fixiert ist.

Nach einer Ausgestaltung der Erfindung ist vorgesehen, daß jeder der Ausleger mittels einer auf den Gegenschwinger aufgeschobenen Hülse gebildet ist. Nach einer Weiterbildung dieser Ausgestaltung der Erfindung ist vorgesehen, daß jede der Ausleger bildenden Hülsen jeweils wenigstens eine Ringnut aufweist. Ferner ist vorgesehen, daß die wenigstens eine Ringnut eines jeden der beiden Ausleger im wesentlichen koaxial, insb. konzentrisch, zu einer Trägheitshauptachse des jeweiligen Auslegers ausgerichtet ist.

Nach einer Ausgestaltung der Erfindung weist das Meßrohr einen Innen-Durchmesser von mehr als 40 mm und/oder eine Wandstärke von mehr als 2 mm auf.

Nach einer Ausgestaltung der Erfindung ist vorgesehen, daß der Meßwandler weiters eine Sensoranordnung zum Erfassen von Schwingungen zumindest des Meßrohrs umfaßt.

Nach einer Ausgestaltung der Erfindung ist vorgesehen, daß der Meßwandler weiters eine Erregeranordnung zum Antreiben zumindest des Meßrohrs umfaßt.

Nach einer Ausgestaltung der Erfindung ist vorgesehen, daß das Meßrohr zumindest zeitweise mit einer Schwingungsfrequenz vibriert, die mindestens einem 1,5-fachen einer niedrigste natürliche Eigenfrequenz eines schwingfähigen Innenteils des Meßwandlers entspricht, das zumindest mittels des Meßrohrs, des Gegenschwingers, des Einlaßrohrstücks, des Auslaßrohrstücks sowie der beiden Ausleger gebildet ist. Nach einer Weiterbildung dieser Ausgestaltung der Erfindung ist vorgesehen, daß die niedrigste natürliche Eigenfrequenz des Innenteils im wesentlichen durch die Massen der Ausleger, des Meßrohrs und des Gegenschwingers sowie einer wirksame Biegesteifigkeit des Einlaß- und des Auslaßrohrstücks bestimmt ist, die solchen Verformungen des Einlaß- und Auslaßrohrstücks entgegenwirkt, die aus lateralen Verschiebungen der Kopplungszonen aus einer jeweiligen statischen Ruhelage und damit einhergehenden Verdrehungen der Ausleger um ihren jeweiligen Massenschwerpunkt resultieren.

Darüber hinaus besteht die Erfindung in einem, beispielsweise als Coriolis- Massendurchflußmeßgerät, Dichtemeßgerät, Viskositätsmeßgerät oder dergleichen ausgebildeten, In-Line-Meßgerät zum Messen und/oder Überwachen wenigstens eines Parameters, beispielsweise eines Massendurchflusse einer Dichte und/oder einer Viskosität, eines in einer Rohrleitung strömenden Mediums, in welchem In-Line-Meßgerät ein Meßwandler der oben genannten Art Verwendung findet.

Ein Vorteil der Erfindung besteht darin, daß durch eine, insb. im Vergleich zu den in der US-A 52 87 754, der US-A 57 05 754, der US-A 57 96 010 oder der US-B 69 48 379 vorgeschlagenen schweren Gegenschwingern, geringfügige Erhöhung der Masse des Innenteils erhebliche Verbesserungen der Balance des Meßwandlers und insoweit auch dessen Störfestigkeit erzielt werden können. Der erfindungsgemäße Meßwandler zeichnet sich dadurch aus, daß er sehr störfest auch gegenüber via angeschlossener Rohrleitung ggf. eingekoppelten Störschwingungen ist. Es hat sich ferner gezeigt, daß ein derartiger Meßwandler z.B. gegenüber einem Meßwandler, dessen innere Querkräfte in vergleichbarer Güte mittels des in der US-A 52 87 754, der US-A 57 05 754, der US-A 57 96 010 oder der US-B 69 48 379 erwähnten einfachen mechanischen Tiefpaßsystems kompensiert werden, eine erheblich niedrigere Masse aufweisen kann. Zudem kann er aufgrund der dynamischen Schwingungsentkopplung sehr kompakt ausgeführt werden. Daher ist der Meßwandler insb. auch für die Messung in Rohrleitungen großer Nennweite, z.B. > 50 mm, geeignet.

Nachfolgend werden die Erfindung und weitere Vorteile anhand eines Ausführungsbeispiels erläutert, das in den Figuren der Zeichnung dargestellt ist. Gleiche Teile sind in den Figuren mit gleichen Bezugszeichen versehen. Falls es der Übersichtlichkeit dienlich ist, wird auf bereits erwähnte Bezugszeichen in nachfolgenden Figuren verzichtet.

Fig. 1 zeigt ein in eine Rohrleitung einfügbares In-Line-Meßgerät zum Messen wenigstens eines Parameters eines in der Rohrleitung geführten Mediums,

Fig. 2 zeigt ein Ausführungsbeispiel für einen für das In-Line-Meßgerät von Fig. 1 geeigneten Meßwandler vom Vibrations-Typ mit einem Meßrohr und einem Gegenschwinger sowie endseitigen Auslegern in einer perspektivischen Seitenansicht,

Fig. 3 zeigt den Meßwandler von Fig. 2 geschnitten in einer Seitenansicht,

Fig. 4 zeigt den Meßwandler von Fig. 2 in einem ersten Querschnitt,

Fig. 5 zeigt den Meßwandler von Fig. 2 in einem zweiten Querschnitt,

Fign. 6 zeigen schematisch Biegelinien des Meßrohrs und eines

a bis d Gegenschwingers in einem lateralen Biegeschwingungsmode oszillierend,

Fig. 7a, b zeigen in verschiedenen, teilweise geschnittenen Ansichten eine Ausgestaltung für einen endseitigen Ausleger eines Meßwandlers gemäß Fig. 2, und

Fig. 8 zeigt schematisch einen Ausschnitt des Meßwandlers mit gemäß Fig. 6c) vibrierendem Meßrohr.

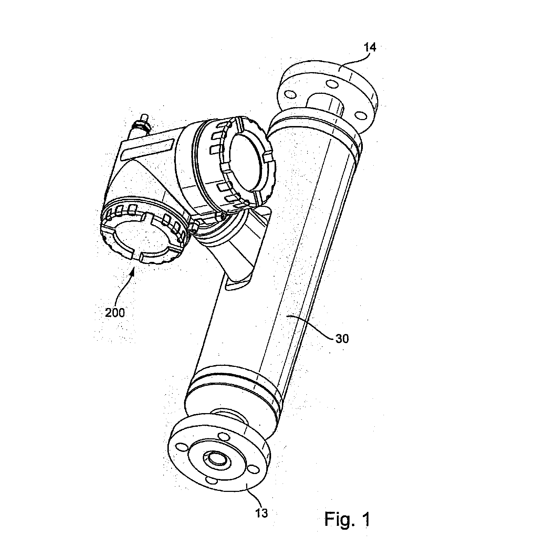

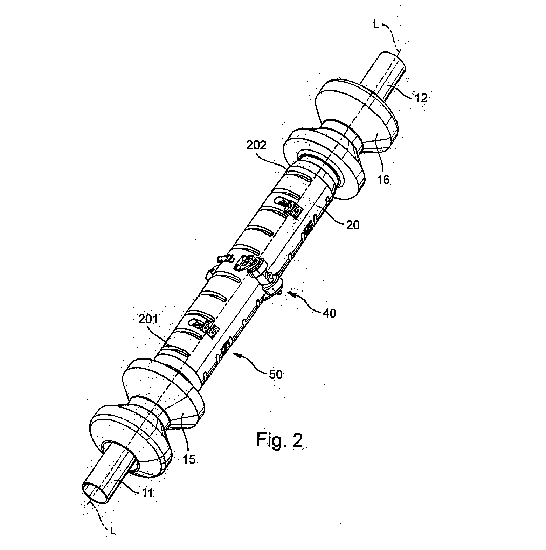

In der Fig. 1 ist ein in eine Rohrleitung einfügbares, beispielsweise als Coriolis- Massendurchflußmeßgerät, Dichtemeßgerät, Viskositätsmeßgerät oder dergleichen ausgebildetes, In-Line-Meßgerät dargestellt, das dem Messen und/oder Überwachen wenigstens eines Parameters, beispielsweise einem Massendurchfluß, einer Dichte, einer Viskosität etc, eines in der Rohrleitung strömenden Mediums dient. Das In-Line-Meßgerät umfaßt dafür einen Meßwandler vom Vibrationstyp der im Betrieb entsprechend vom zu messenden Medium durchströmt ist. In den Fig. 2 bis 5 sind entsprechende Ausführungsbeispiele und Ausgestaltungen für solche Meßwandler vom Vibrationstyp schematisch dargestellt. Darüber hinaus sind der prinzipielle mechanische Aufbau sowie dessen Wirkungsweise mit den denen der in den US-B 66 91 583 oder US-B 68 40 109 gezeigten Meßwandler vergleichbar. Der Meßwandler dient dazu, in einem hindurchströmenden Medium mechanische Reaktionskräfte, z.B. massedurchflußabhängige Coriolis-Kräfte, dichteabhängige Trägheitskräfte und/oder viskositätsabhängige Reibungskräfte, zu erzeugen, die meßbar, insb. sensorisch erfaßbar, auf den Meßwandler zurückwirken. Abgeleitet von diesen Reaktionskräften können so in der dem Fachmann bekannten Weise z.B. ein Massedurchfluß $m$, eine Dichte $p$ und/oder eine Viskosität $h$ des Mediums gemessen werden.

Zum Führen des Mediums umfaßt Meßwandler ein - hier einziges - im wesentlichen gerades Meßrohr 10, das im Betrieb vibrieren gelassen und dabei, um eine statische Ruhelage oszillierend, wiederholt elastisch verformt wird.

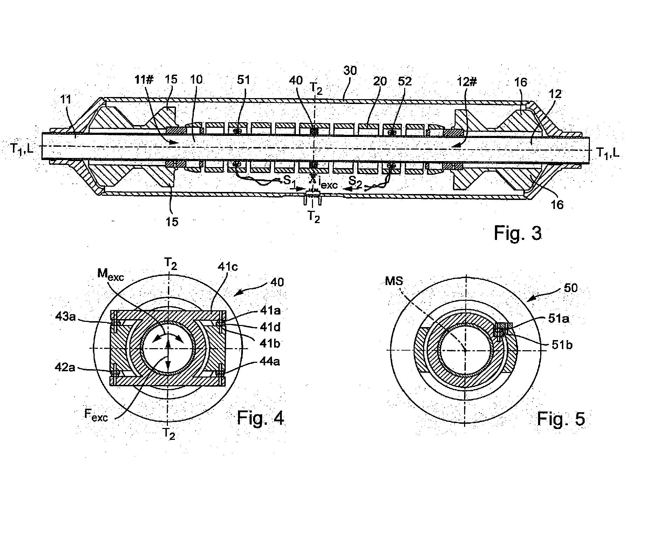

Zur Minimierung von auf das Meßrohr 10 wirkenden Störeinflüssen wie auch zur Reduzierung von seitens des Meßwandlers an die angeschlossene Rohrleitung abgegebener Schwingungsenergie ist im Meßwandler des weiteren ein - hier im wesentlichen parallel zum Meßrohr 10 verlaufender - Gegenschwinger 20 vorgesehen. Dieser ist, wie auch in Fig. 3 gezeigt, unter Bildung einer - praktisch ein Einlaßende des Meßrohrs 10 definierenden - ersten Kopplungszone 11# einlaßseitig und der unter Bildung einer - praktisch ein Auslaßende des Meßrohrs 10 definierenden - zweiten Kopplungszone 12# auslaßseitig jeweils am Meßrohr 10 fixiert. Der Gegenschwinger 20 kann rohr - oder kastenförmiger ausgeführt und beispielsweise so am Einlaßende und am Auslaßende mit dem Meßrohr 10 verbunden sein, daß er, wie aus der Zusammenschau von Fig. 2 und 3 ersichtlich, im wesentlichen koaxial zum Meßrohr 10 ausgerichtet ist und somit das Meßrohr 10 vom Gegenschwinger 20 ummantelt ist. Zudem ist der Gegenschwinger 20 im vorliegenden Ausführungsbeispiel wesentlich schwerer ausgelegt als das Meßrohr 10.

Zum Hindurchströmenlassen des zu messenden Mediums ist das Meßrohr 10 über ein einlaßseitig im Bereich der ersten Kopplungszone einrründendes Einlaßrohrstück 11 und über ein auslaßseitig im Bereich der zweiten Kopplungszone einmündendes, insb. zum Einlaßrohrstück 11 im wesentlichen identisches, Auslaßrohrstück 12 entsprechend an die das Medium zu- bzw. abführende - hier nicht dargestellte - Rohrleitung angeschlossen. Einlaßrohrstück 11 und Auslaßrohrstück 12 sind im gezeigten Ausführungsbeispiel wesentlichen gerade ausgeführt und zueinander, zum Meßrohr 10 sowie zu einer die Kopplungszonen praktisch verbindenden imaginären Längsachse L fluchtend ausgerichtet. Gemäß einer Ausgestaltung der Erfindung entspricht eine Länge, $L_{11}$, des Einlaßrohrstücks 11 sowie eine Länge, $L_{12}$, des Auslaßrohrstücks 12 jeweils höchstens einem 0,5-fachen einer Länge, $L_{10}$, des Meßrohrs 10. Um einen möglichste kompakten Meßwandler bereitstellen zu können weisen im besonderen sowohl das Einlaßrohrstück 11 eine Länge, $L_{11}$, als auch das Auslaßrohrstück 12 eine Länge, $L_{12}$, auf, die jeweils kleiner als ein 0,4-faches einer Länge, $L_{10}$, des Meßrohrs 10 ist.

In vorteilhafter Weise können Meßrohr 10, Einlaß- und Auslaßrohrstück 11, 12 einstückig ausgeführt sein, so daß zu deren Herstellung z.B. ein einziges rohrförmiges Halbzeug dienen kann. Anstelle dessen, daß Meßrohr 10, Einlaßrohrstück 11 und Auslaßrohrstück 12 jeweils durch Segmente eines einzigen, einstückigen Rohres gebildet sind, können diese, falls erforderlich aber auch mittels einzelner, nachträglich zusammengefügter, z.B. zusammengeschweißter, Halbzeuge hergestellt werden.

Wie in Fig. 2 und 3 schematisch dargestellt, umfaßt der erfindungsgemäße Meßwandler ferner einen im Bereich der ersten Kopplungszone mit dem Einlaßrohrstück 11 und dem Meßrohr 10 gekoppelten ersten Ausleger 15, der einen im Bereich des Einlaßrohrstücks 11 liegenden Massenschwerpunkt $M_{15}$ aufweist, sowie einen im Bereich der zweiten Kopplungszone mit dem Auslaßrohrstück 12 und dem Meßrohr 10 gekoppelten zweiten Ausleger 16, der einen im Bereich des Auslaßrohrstücks 12 liegenden Massenschwerpunkt $M_{16}$ aufweist. Anders gesagt, sind die beiden, insb. im wesentlichen baugleichen, ggf. sogar einander identischen, Ausleger 15, 16 so im Meßwandler angeordnet, daß der jeweilige Masseschwerpunkt $M_{15}$, $M_{16}$ vom Meßrohr 10, insb. in dessen Flucht liegend, beabstandet ist. Die beiden Ausleger 15, 16 sind also insoweit exzentrisch am Ein- bzw. Auslaßrohrstück und entsprechend exzentrisch auch an Meßrohr 10 und Gegenschwinger 20 gehaltert. Nach einer weiteren Ausgestaltung der Erfindung ist der Ausleger 15 so geformt und am Meßrohr 10 angebracht, daß dessen Massenschwerpunkt $M_{15}$ im wesentlichen in einem Bereich einer halben Länge des Einlaßrohrstücks 11 liegt und ist der Ausleger 16 so geformt und am Meßrohr 10 angebrächt das dessen Massenschwerpunkt $M_{16}$ im wesentlichen in einem Bereich einer halben Länge des Auslaßrohrstücks 12 liegt. Um ein möglichst kompakten Meßwandler zu erhalten ist gemäß einer Ausgestaltung der Erfindung vorgesehen, jeden der Ausleger 15, 16 so auszubilden, daß eine Länge, $L_{15}$ bzw. $L_{16}$, desselben höchsten einem 0,9-fachen einer Länge, $L_{11}$, des Einlaßrohrstücks 11 und einer Länge $L_{12}$, des Auslaßrohrstücks 12 und/oder höchstens einem 0,5-fachen einer Länge, $L_{10}$, des Meßrohrs 10 entspricht. Im besonderen ist jeder der Ausleger 15, 16 ferner so ausgeführt, daß die jeweilige Länge dabei auch möglichst kleiner als ein 0,4-faches der Länge, $L_{10}$, des Meßrohrs 10 ist.

Das mittels des Meßrohrs 10, des Gegenschwingers 20, des Einlaßrohrstücks 11, des Auslaßrohrstücks 12 sowie der beiden Ausleger 15, 16 gebildete Innenteil des Meßwandlers ist, wie aus einer Zusammenschau von Fig. 1 und 3 ersichtlich, ferner in einem das Innenteil mediumsdicht und weitgehend druckfest umhüllendes Wandlergehäuse 30 schwingfähig gehalten, das am jeweils von den Kopplungszonen entfernten Ende des Ein- und Auslaßrohrstück 11, 12 entsprechend fixiert ist. Für den Fall, daß der Meßwandler lösbaren mit der Rohrleitung zu montieren ist, ist dem Einlaßrohrstück 11 und dem Auslaßrohrstück 12 jeweils ein erster bzw. zweiter Flansch 13, 14 entsprechend angeformt. Die Flansche 13, 14 können dabei gleichzeitig auch als integraler Bestandteil des Wandlergehäuses 30 ausgebildet sein. Falls erforderlich können Ein- und Auslaßrohrstück 11, 12 aber auch direkt mit der Rohrleitung, z.B. mittels Schweißen oder Hartlötung verbunden werden.

Zur Herstellung der einzelnen Komponenten des vorgenannten Innenteils kann praktisch jedes der für solche Meßwandler üblichen Materialien, wie z.B. Stahl, Titan, Tantal, Zirkonium etc, oder auch entsprechende Kombinationen dieser Materialien verwendet werden. Beispielsweise hat sich die Verwendung von Titan für Meßrohr 10 sowie das Einlaßrohrstück 11 und das Auslaßrohrstück 12 als besonders geeignet gezeigt, während, beispielsweise aus Gründen der Kostenersparnis sowohl für den Gegenschwinger 20 und die Ausleger 15, 16 als auch das Wandlergehäuse 30 die Verwendung von Stahl von Vorteil ist. Um eine möglichst einfache, kostengünstige Fertigung der Ausleger wie schließlich des Meßwandlers zu ermöglichen, kann jeder der beiden Ausleger 15, 16 beispielsweise im wesentlichen röhrenförmig oder hülsenförmig ausgebildet sein, so daß er praktisch mittels einer auf den Gegenschwinger 20 aufgeschobenen, insb. metallische, Hülse gebildet werden kann, insb. auch dann, wenn der Gegenschwinger 20 bereits mit dem Meßrohr 10 verbunden worden ist. Gemäß einer Weiterbildung dessen weist jeder der dabei den jeweiligen Ausleger 15, 16 bildenden Hülsen jeweils wenigstens eine Ringnut auf. Wie sich aus der Zusammenschau der Fig. 2 und 3 zwanglos ergibt, ist jede der wenigstens zwei Ringnuten beim vorliegenden Ausführungsbeispiel im wesentlichen koaxial, insb. konzentrisch, zu einer im wesentlichen zur Längsachse L parallelen Trägheitshauptachse des jeweiligen Auslegers 15, 16 ausgerichtet. Alternativ zu der Verwendung vorgenannter Hülsen für die Ausleger 15, 16 können diese aber auch zusammen mit dem Gegenschwinger 20 beispielsweise aber auch mittels eines einzigen rohrförmigen Halbzeugs einstückig oder mittels zweier Rohrhälften zweistückig gefertigt werden.

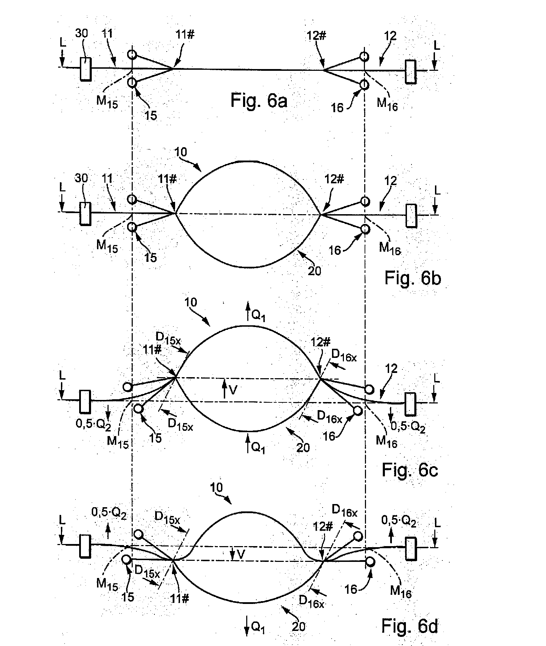

Im Betrieb des Meßwandlers wird das Meßrohr 10 - wie bereits eingangs erwähnt - zumindest zeitweise zu lateralen Biegeschwingungen, insb. im Bereich einer natürlichen Resonanzfrequenz, so angeregt, daß es sich in diesem sogenannten Nutzmode im wesentlichen gemäß einer natürlichen ersten Eigenschwingungsform ausbiegt. Die Biegeschwingungen sind dabei im wesentlichen transversal zu einer mit der Längsachse L im wesentlichen parallelen, insb. koinzidierenden, Biegeschwingungsachse ausgerichtet. Nach einer Ausgestaltung der Erfindung, wird das Meßrohr 10 dabei mit einer Schwingungsfrequenz, $f_{exc}$, angeregt, die möglichst genau einer natürlichen Resonanzfrequenz des sogenannten $f1$-Eigenmodes des Meßrohrs 10 entspricht, also einem symmetrischen Eigenmode bei dem, wie in Fign. 6 b) bis d) schematisch dargestellt, das vibrierende, jedoch nicht vom Medium durchströmte Meßrohr 10 bezüglich einer zur Längsachse senkrechten Mittelachse im wesentlichen symmetrisch ausgebogen wird und dabei im wesentlichen einen einzigen Schwingungsbauch aufweist. Gleichermaßen wird auch der Gegenschwinger 20, wie in Fig. 6b schematisch dargestellt, im Betrieb des Meßwandlers ebenfalls zu Biegeschwingungen angeregt, die im wesentlichen koplanar, jedoch im wesentlichen gegenphasig zu den Biegeschwingungen des Meßrohrs 10 ausgebildet sind. Für den Fall, daß das Medium in der Rohrleitung strömt und somit der Massedurchfluß $m$ von Null verschieden ist, werden mittels des in vorgenannter Weise vibrierenden Meßrohrs 10 im hindurchströmenden Medium Corioliskräfte induziert. Diese wiederum wirken auf das Meßrohr 10 zurück und bewirken so eine zusätzliche, sensorisch erfaßbare - hier jedoch nicht dargestellte - Verformung des Meßrohrs 10 gemäß einer natürlichen zweiten Eigenschwingungsform, die dem angeregten Nutzmode im wesentlich koplanar überlagert ist. Die momentane Ausprägung der Verformung des Meßrohrs 10 ist dabei, insb. hinsichtlich ihrer Amplituden, auch vom momentanen Massedurchfluß $m$ abhängig. Als zweite Eigenschwingungsform, dem sogenannten Coriolismode, kann, wie bei derartigen Meßwandlern üblich, z.B. die Eigenschwingungsform des anti-symmetrischen $f2$-Eigenmodes, also jene mit zwei Schwingungsbäuchen und/oder die Eigenschwingungsform des anti-symmetrischen $f4$-Eigenmodes mit vier Schwingungsbäuchen dienen.

Gemäß einer Ausgestaltung der Erfindung sind ferner Meßrohr 10 und Gegenschwinger 20 so dimensioniert, daß das leere Meßrohr 10 eine niedrigste natürliche Eigenfrequenz, $f_{10}$, aufweist, die größer oder etwa gleich einer niedrigsten natürlichen Eigenfrequenz, $f_{20}$, des Gegenschwingers 20 ist. Im besonderen sind Meßrohr 10 und Gegenschwinger 20 dabei so dimensioniert, daß das mit Wasser befüllte Meßrohr 10 eine niedrigste natürliche Eigenfrequenz, $f_{10,H20}$, aufweist, die mindestens gleich einer niedrigsten natürlichen Eigenfrequenz, $f_{20}$, des Gegenschwingers 20 ist. Gemäß einer weiteren Ausgestaltung der Erfindung ist ferner vorgesehen, Meßrohr 10 und Gegenschwinger 20 hinsichtlich ihrer Schwingungseigenschaften so aufeinander abzustimmen, daß eine niedrigste natürliche Eigenfrequenz, $f_{10,\ H20}$ Meßrohrs 10 auch dann mindestens einem 1,1-fachen einer niedrigsten natürlichen Eigenfrequenz, $f_{20}$, des Gegenschwingers 20 entspricht, wenn es vollständig mit Wasser befüllt ist. Bei einem Meßrohr 10 aus Titan mit einer Nennweite DN von etwa 55 mm, einer Länge, $L_{10}$, von etwa 570 mm und einer Wandstärke von etwa 2,5 mm würde eine natürliche Resonanzfrequenz, $f_{10,\ Luft}$, des $f1$ - Eigenmodes des leeren Meßrohrs etwa bei 550 Hz liegen, während eine natürliche Resonanzfrequenz, $f_{10,\ H2O}$, des $f1$-Eigenmodes des mit Wasser befüllten Meßrohrs etwa 450 Hz betragen würde.

Gemäß der Erfindung sind Meßrohr 10 und Gegenschwinger 20 dafür so dimensioniert, daß eine Masse, $m_{20}$, des Gegenschwingers 20 mindest einem 5-fachen einer Masse, $m_{10}$, des Meßrohrs 10 entspricht. Bei der Verwendung eines Rohres aus Stahl mit einem Außendurchmesser von etwa 100 mm und einer Wandstärke von etwa 10 mm würde sich unter Berücksichtigung des in der vorbeschriebenen Weise dimensionierten Meßrohrs für den Gegenschwingers 20 eine Masse, $m_{20}$, in der Größenordnung von etwa 10 kg ergeben.

Nach einer Weiterbildung der Erfindung, führt das Meßrohr 10 ferner, insb. auch in Anlehnung an den in der

**EP 1 949 048 B1**

US-B 68 40 109 gezeigten Meßwandler, im Betrieb zumindest zeitweise Torsionsschwingungen um eine mit der Längsachse L im wesentlichen parallelen, insb. koinzidierenden, Torsionsschwingungsachse aus. Torsionsschwingungsachse, Biegeschwingungsachse wie auch die Längsachse L können, wie bei derartigen Meßwandlern durchaus üblich, koinzident sein. Für das oben beschriebene Meßrohr 10 würde sich beispielsweise eine niedrigste natürliche Resonanzfrequenz für die Torsionsschwingungen im Bereich von etwa 750 Hz ergeben.

Zum Erzeugen mechanischer Schwingungen des Meßrohrs 10 - seien es nun Biegeschwingungen und/oder Torsionsschwingungen - umfaßt der Meßwandler weiters eine, insb. elektrodynamische, Erregeranordnung 40. Diese dient dazu, eine von einer, hier nicht dargestellten, Steuer-Elektronik eingespeiste, elektrische Erregerenergie $E_{exc,}$ z.B. mit einem geregelten Strom und/oder einer geregelten Spannung, in eine auf das Meßrohr 10, z.B. pulsförmig oder harmonisch, einwirkende und dieses in der vorbeschriebenen Weise elastisch verformenden Erregerkraft $F_{exc}$ umzuwandeln. Die Erregerkraft $F_{exc}$ kann hierbei, wie in Fig. 4 schematisch dargestellt, bidirektional oder aber auch unidirektional ausgebildet sein und in der dem Fachmann bekannten Weise z.B. mittels einer Strom- und/oder Spannungs-Regelschaltung, hinsichtlich ihrer Amplitude und, z.B. mittels einer Phasen-Regelschleife, hinsichtlich ihrer Frequenz eingestellt werden.

Als Erregeranordnung kann z.B. eine einfache differentiell auf Meßrohr 10 und Gegenschwinger 20 einwirkende Tauchspulenanordnung mit einer am Gegenschwinger 20 befestigten zylindrischen Erregerspule, die im Betrieb von einem entsprechenden Erregerstrom durchflossen ist, und mit einem in die Erregerspule zumindest teilweise eintauchenden dauermagnetischen Anker, der von außen, insb. mittig, am Meßrohr 10 fixiert ist, dienen. Ferner kann die Erregeranordnung 40 z.B. auch als ein Elektromagnet oder, wie z.B. in der WO- A 99 51 946 gezeigt, als ein seismischer Erreger realisiert sein. Zum Detektieren von Schwingungen des Meßrohr 10 kann z.B. eine für derartige Meßwandler übliche Sensoranordnung verwendet werden, bei der in der dem Fachmann bekannten Weise mittels eines einlaßseitigen ersten Sensors 50A und mittels eines auslaßseitigen zweiten Sensors 50B die Bewegungen des Meßrohrs 10 erfaßt und in ein entsprechendes erstes bzw. zweites Sensorsignal $S_1$, $S_2$ umgewandelt werden. Als Sensoren 50A, 50B können z.B. die Schwingungen relativ zum Gegenschwinger, z.B. differentiell messende, elektrodynamische Geschwindigkeitssensoren oder aber elektrodynamische Wegsensoren oder Beschleunigungssensoren verwendet werden. Anstelle elektrodynamischer Sensoranordnungen oder in Ergänzung derselben können ferner auch mittels resistiver oder piezo-elektrischer Dehnungsmeßstreifen messende oder opto-elektronische Sensoren zum Detektieren der Schwingungen des Meßrohrs 10 dienen.

Nach einer weiteren Ausgestaltung der Erfindung ist die Erregeranordnung 40, wie auch in Fig. 2 bis 4 gezeigt, so ausgebildet und so im Meßwandler angeordnet sein, daß sie im Betrieb gleichzeitig, insb. differentiell, auf Meßrohr 10 und Gegenschwinger 20 wirkt. Im in der Fig. 4 gezeigten Ausführungsbeispiel weist die Erregeranordnung 40 dazu wenigstens eine im Betrieb zumindest zeitweise vom Erregerstrom oder einem Erregerteilstrom durchflossene erste Erregerspule 41a auf, die an einem mit dem Meßrohr 10 verbundenen Hebel 41c fixiert ist und über diesen und einen von außen am Gegenschwinger 20 fixierten Anker 41b differentiell auf das Meßrohr 10 und den Gegenschwinger 20 einwirkt. Diese Anordnung hat u.a. auch den Vorteil, daß einerseits der Gegenschwinger 20 und somit auch das Wandlergehäuse 100 im Querschnitt klein gehalten und trotzdem die Erregerspule 41a, insb. auch bei der Montage, leicht zugänglich ist. Darüber hinaus besteht ein weiterer Vorteil dieser Ausgestaltung der Erregeranordnung 40 auch darin, daß allfällig verwendete, insb. bei Nennweiten von über 50 mm nicht mehr vernachlässigbar schwere, Spulenbecher 41d ebenfalls am Gegenschwinger 20 fixierbar sind und somit praktisch keinen Einfluß auf die Resonanzfrequenzen des Meßrohrs 10 haben. Es sei jedoch an dieser Stelle darauf hingewiesen, daß falls erforderlich, die Erregerspule 41a auch vom Gegenschwinger 20 und dementsprechend der Anker 41b vom Meßrohr 10 gehaltert werden können.

In entsprechender Weise kann auch die Sensoranordnung 50 so ausgelegt und im Meßwandler angeordnet sein, daß durch sie die Vibrationen von Meßrohr 10 und Gegenschwinger 20 differentiell erfaßt werden. Im in der Fig. 5 gezeigten Ausführungsbeispiel umfaßt die Sensoranordnung 50 eine am Meßrohr 10 fixierte, hier außerhalb sämtlicher Trägheitshauptachsen der Sensoranordnung 50 angeordnete, Sensorspule 51a. Die Sensorspule 51a ist möglichst nah zu einem am Gegenschwinger 20 fixierten Anker 51b angeordnet und mit diesem magnetisch so gekoppelt, daß in der Sensorspule eine durch rotatorische und/oder laterale, ihre relative Lage und/oder ihren relativen Abstand verändernde Relativbewegungen zwischen Meßrohr 10 und Gegenschwinger 20 beeinflußte, veränderliche Meßspannung induziert wird. Aufgrund einer solchen Anordnung der Sensorspule 51a können in vorteilhafter Weise gleichzeitig sowohl die oben genannten Torsionsschwingungen als auch die ggf. angeregten Biegeschwingungen erfaßt werden. Falls erforderlich können die Sensorspule 51a dazu aber auch am Gegenschwinger 20 und in entsprechender Weise der mit dieser gekoppelte Anker 51b am Meßrohr 10 fixiert sein.

Wie bereits mehrfach erwähnt, werden bei einer Anregung des Nutzmodes in dem in der oben beschriebenen Weise vibrierenden, einzigen Meßrohr 10 aufgrund von mit den Biegeschwingungen einhergehenden Massenbeschleunigungen bekanntlich Querkräfte $Q_1$ erzeugt; somit treten im Meßwandler in entsprechender Weise auch lateral ausgerichtete Querimpulse auf. Beispielsweise würde sich bei einer Schwingungsamplitude von ca. 0,03 mm für das oben erwähnte Edelstahl-Meßrohr eine Querkraft von etwa 100 N ergeben. Für den Fall, daß diese Querkräfte $Q_1$ nicht kompensiert werden können, führt dies dazu, daß das am Einlaßrohrstück 11 und am Auslaßrohrstück 12 aufgehängte

9

Innenteil des Meßwandlers entsprechend lateral aus der zugewiesenen statischen Ruhelage verschoben wird. Dementsprechend würden die Querkräfte $Q_1$ via Einlaß- und Auslaßrohrstück 11, 12 zumindest teilweise auch auf die angeschlossene Rohrleitung wirken und diese somit gleichfalls vibrieren lassen. Wie ferner erläutert, kann das Meßrohr 10 auch mittels des Gegenschwingers 20, praktisch nur für einen einzigen Mediumsdichtewert, bestenfalls aber für einen sehr schmalen Mediumsdichtebereich dynamisch ausbalanciert werden, vgl. Fig. 6b. Vielmehr aber wird das Meßrohr 10 und infolgedessen praktisch das gesamte Innenteil bei schwankender Mediumsdichte r aus der Ruhelage, in den Fig. 6a bis d symbolisiert durch die Längsachse L, lateral verschoben werden, und zwar bei niedriger Dichte r unterhalb des Mediumsdichtewertes, wie in der Fig. 6c schematisch dargestellt, in Richtung seiner eigenen Schwingungsbewegung oder bei hoher Dichte r oberhalb des erwähnten Mediumsdichtwerts, wie in der Fig. 6d gezeigt, in Richtung der Schwingungsbewegung des Gegenschwingers 20. Insofern dient der Gegenschwinger 20 also eher dazu, den Meßwandler für genau einen vorherbestimmten, z.B. einen im Betrieb des Meßwandlers am häufigsten zu erwartenden oder auch kritischen Mediumsdichtewert, z.B. die Dichte von Wasser, soweit dynamisch auszubalancieren, daß die im vibrierenden Meßrohr erzeugten Querkräfte $Q_1$ möglichst vollständig kompensiert werden und letzteres dann seine statische Ruhelage praktisch nicht verläßt, vgl. Fig. 6a, 6b. Um ein möglichst einfach handhabbares Abstimmen des Gegenschwingers 20 auf den erwähnten Mediumsdichtewert und die dann tatsächlich angeregte Schwingungsform des Meßrohrs 10 zu ermöglichen, sind nach einer Ausgestaltung der Erfindung dem Gegenschwinger 20 diskrete Massenstücke 201, 202, insb. lösbar, aufgesetzt. Die Massenstücke 201, 202 können z.B. auf entsprechende, von außen am Meßrohr fixierte Stehbolzen aufgeschraubte Scheiben oder auf das Meßrohr 10 aufgeschobene kurze Rohrstücke sein. Ferner kann eine entsprechende Massenverteilung über dem Gegenschwinger 20 z.B. auch durch Ausformen von Längs- oder Ringnuten realisiert werden. Eine für die jeweilige Anwendung geeignete Masseverteilung kann in der dem Fachmann bekannten Weise vorab z.B. mittels Finite-Elemente-Berechnungen und/oder mittels experimenteller Messungen ohne weiteres ermittelt werden. Falls erforderlich, können selbstverständlich auch mehr als die gezeigten zwei Massenstücke 201, 202 verwendet werden.

Zur weiteren verbesserten dynamischen Ausbalancierung des Meßwandlers, insb. auch bei Medien mit signifikant schwankender Dichte r, sind, auch mit Blick auf die in der US-B 66 91 583 oder der US-B 68 40 109 gezeigten Entkopplungsprinzipien für Biege- und/oder Torsionsschwingungen, der Ausleger 15 an Einlaßrohrstück 11, Gegenschwinger 20 und Meßrohr 10 sowie der Ausleger 16 an Auslaßrohrstück 12, Gegenschwinger 20 und Meßrohr 10 im wesentlichen starr gekoppelt. Dabei können die, insb. möglichst nah zum Meßrohr 10 hin angeordneten, Ausleger 15, 16 sowohl stoff- als auch form- und/oder kraftschlüssig mit der jeweils anderen Komponente des Innenteils, beispielsweise dem Gegenschwinger 20, verbunden sein. Dementsprechend können die Ausleger, z.B. abgeschweißt gelötet, aufgeklemmt und/oder aufgepreßt sein. Auf diese Weise werden mittels der Ausleger 15, 16 gleichermaßen exzentrisch, also nicht im zugehörigen Massenschweipunkt $M_{15}$ bzw. $M_{16}$, an der jeweiligen Fixierstelle angreifende erste Massenträgheitsmomente, $J_{15x}$, $J_{16x}$, geschaffen, die kein Hauptträgheitsmoment des jeweiligen Auslegers 15, 16 sind. Beispielsweise kann jeder der Ausleger 15, 16 dafür zumindest anteilig unmittelbar am Gegenschwinger 20 fixiert sein.

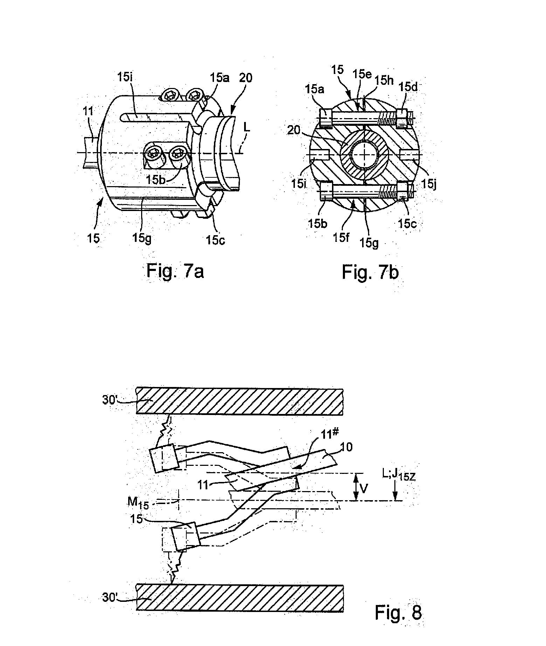

Für den vorgenannten Fall, daß die Ausleger 15, 16 jeweils auf Gegenschwinger 20 und/oder das zugehörige Verbindungsrohrstück aufgeklemmt werden sollen, können sie z.B. auch mittels entsprechender Schraubverbindungen fixiert werden. So ist in der Fig. 7a, b anhand des Auslegers 15 eine vorteilhafte Klemmverbindung für Ausleger der beschriebenen Art dargestellt. Der Ausleger ist hierbei mittels wenigstens zweier zueinander paralleler Durchgangsbolzen 15, 15b und entsprechender Muttern 15c, 15d nach dem Aufschieben auf den Gegenschwinger 20 fixiert worden, wobei die beiden Durchgangsbolzen 15a, 15b in auf einander gegenüberliegenden Seiten im Ausleger 15 angeordneten Durchgangsbohrungen 15e, 15f plaziert sind. Zum Verhindern eines ungewollten Wiederlösen der Muttern 15c, 15d können diese, falls erforderlich, nach der Montage zusätzlich mit dem jeweiligen Durchgangsbolzen in geeigneter Weise, z.B. mittels Metallkleber, adhäsiv und/oder, z.B. durch Schweißen und/oder Löten, stoffschlüssig verbunden werden. Um einen möglichst guten Kraftschluß zwischen Ausleger 15 und Gegenschwinger 20 bei akzeptablen Spannkräften in den Durchgangsbolzen 15a, 15b und im Gegenschwinger 20 zu gewährleisten, sind bei der hier gezeigten Variante zusätzlich mit der Längsachse L im wesentlichen fluchtende und zumindest auf der dem Gegenschwinger 20 und dem Meßrohr 20 zugewandten Frontpartie radial durchgängige Längsschlitze 15g, 15h eingearbeitet.

Bei lateralen Bewegungen der beiden Kopplungszonen 11#, 12#, beispielsweise infolge von dichteabhängigen Imbalancen zwischen Meßrohr 10 und Gegenschwinger 20 und/oder von extern in den Meßwandler eingekoppelten Störschwingungen, werden also seitens des Auslegers 15 im Einlaßrohrstück 11 und seitens des Auslegers 16 im Auslaßrohrstück 12 jeweils Biegmomente erzeugt, die aufgrund der Exzentrizität und der Massenträgheit der Ausleger 15, 16 so gerichtet sind, daß damit einhergehende Verformungen von Einlaß- und Auslaßrohrstück 11, 12 den lateralen Bewegungen der Kopplungszonen 11#, 12# entgegengerichtet sind. Anders gesagt, sind die Ausleger 15, 16 so geformt und bemessen, daß daraus resultierende erste Massenträgheitsmomente $J_{15x}$, $J_{16x}$ um eine quer zur Längsachse L verlaufende, jedoch von einer dazu parallelen Trägheitshauptachse des jeweiligen Auslegers beabstandeten imaginäre Drehachse $D_{15x}$, $D_{16x}$, zwar ein Verdrehen der Ausleger 15, 16 bei beschleunigter lateraler Verschiebung der Kopplungszonen 11#, 12#, erlauben, die jeweils zughörigen Massenschwerpunkte $M_{15}$, $M_{16}$ jedoch zumindest lateral im wesentlichen ortsfest in jener statischen Ruhelage verharren gelassen werden, die ihnen aufgrund der konkreten mechanisch-geometrischen Eigenschaften der Ausleger 15, 16 jeweils zugewiesenen sind. Insoweit bildet jeder der Massenschwerpunkte $M_{15}$, $M_{16}$ praktisch einen Drehpunkt für die die Biegemomente erzeugenden Drehbewegungen der Ausleger 15, 16.

Die in vorgenannter Weise exzentrisch an der jeweiligen Fixierstelle angreifenden Massenträgheitsmomente $J_{15x}$, $J_{16x}$, der Ausleger 15, 16 erzwingen somit - aufgrund beschleunigter lateraler Verschiebebewegungen V des Meßrohrs 10 um den jeweiligen, praktisch ortsfest ruhenden Massenschwerpunkt $M_{15}$ bzw. $M_{16}$ pendelnd - eine zusätzliche Verdrehung der jeweils zugehörigen Fixierstelle um die zu dieser lateralen Verschiebebewegung V sowie zur Längsachse L senkrechten imaginäre erste bzw. um die zur ersten im wesentlichen parallele imaginäre zweite Drehachse $D_{15x}$, $D_{16x}$, vg1. Fig. 6c und d. Diese, in Fig. 8 nochmals vergrößert dargestellte, Verdrehung praktisch der gesamten einlaßseitigen ersten Kopplungszone 11#, insb. des Einlaßendes, wiederum bewirkt zumindest abschnittsweise eine zusätzliche, zur Verschiebebewegung V des Meßrohrs 10 gegenläufige Verbiegung des Einlaßrohrstücks 11, die praktisch einer einachsigen, querkraftfreien und somit weitgehend schubspannungsfreien Biegung entspricht; in analoger Weise wird das Auslaßrohrstück 12 ebenfalls gegenläufig zur Verschiebebewegung V gebogen.

Die beiden Ausleger 15, 16 sind, wie auch in den Fig. 1 bis 4, dargestellt, einseitig, also lediglich im Bereich der Kopplungszonenen 11#, 12# fixiert. Zur Unterdrückung allfälliger unerwünschter Schwingungsmoden können ferner, wie in Fig. 8 schematisch dargestellt, jedoch zusätzliche der Stabilisierung der Massenschwerpunkte $M_{15}$, $M_{16}$ der Ausleger 15 bzw. 16 in ihrer jeweiligen Ruhelage dienende Feder - und/oder Dämpfungselemente vorgesehen sein, die, z.B. quer zur Hauptschwingungsebene oder, wie hier gezeigt, im wesentlichen in der Hauptschwingungsebene liegend jeweils an der Auslegermasse und am Wandlergehäuse 30 fixiert sind.

Die Dimensionierung des Innenteils, inkl. des Meßrohrs, des Gegenschwingers, des Ein- und Auslaßrohrstücks sowie der Ausleger, sowie die dadurch beeinflußten Verbiegungen von Ein- bzw. Auslaßrohrstück 11, 12 können, z.B. mittels computergestützter Simulationsberechnungen oder mittels experimenteller Messungen, dahingehend optimiert werden, daß durch die Verbiegung erzeugte Gegenkräfte $Q_2$ die oben erwähnten Querkräfte $Q_1$ im vibrierenden Meßrohr 10 über einen möglichst weiten Schwankungsbereich der Mediumsdichte vollständig oder zumindest weitgehend kompensiert werden, und zwar so, daß außen am Wandlergehäuse 30 und somit auch an der angeschlossenen Rohrleitung praktisch keine durch das vibrierende Meßrohr 10, ggf. auch das gesamte oszillierende Innenteil verursachten Querkräfte auftreten. Allfällige Verformungen der angeschlossenen Rohrleitung aufgrund der so erzeugten Biegemomente können beispielsweise durch eine entsprechend hohe Biegesteifigkeit des Wandlergehäuses 30 ohne weiteres unterdrückt werden.

Gemäß einer anderen Ausgestaltung der Erfindung ist vorgesehen, daß das Meßrohr 10, angetrieben von der Erregeranordnung, im Betrieb in überwiegendem Maße und/ oder zumindest zeitweise mit einer Schwingungsfrequenz, $f_{exc}$, vibrieren gelassen, die mindestens einem 1,5-fachen einer niedrigste natürliche Eigenfrequenz eines schwingfähigen Innenteils des Meßwandlers entspricht, das - wie bereits ausgeführt - zumindest mittels des Meßrohrs 10 selbst, des Gegenschwingers 20, des Einlaßrohrstücks 11, des Auslaßrohrstücks 12 sowie der beiden Ausleger 15, 16 gebildet ist. Anders gesagt, soll die natürliche Resonanzfrequenz des Nutzmodes wenigstens 1,5-fachen, möglichst aber mehr als einem 2-fachen der niedrigsten natürlichen Eigenfrequenz des Innenteils entsprechen. Bei den hier vorgestellten Abmessungen des Innenteils würde dessen niedrigste natürliche Eigenfrequenz bei leerem Meßrohr beispielsweise etwa 250 Hz oder weniger betragen, während sie bei mit Wasser gefülltem Meßrohr etwa in der Größenordnung von 200 Hz oder darunter liegen würde.

Weiterführende Untersuchungen haben nunmehr gezeigt, daß diese vorgenannte Forderung dadurch wirkungsvoll, insb. auch unter Beibehaltung des in der US-B 66 91 583 oder der US-B 68 40 109 gezeigten Entkopplungsprinzips, realisiert und somit, insb. gegenüber den in der US-B 66 91 583 oder der US-B 68 40 109 gezeigten Meßwandlern, erhebliche Verbesserungen hinsichtlich der Störfestigkeit und insoweit auch der Meßgenauigkeit von In-Line-Meßgeräten der beschriebenen Art erzielt werden können, daß jeder der beiden Ausleger 15, 16 so ausgelegt ist, daß er eine im Vergleich zur Masse, $m_{10}$, des Meßrohrs 10 erheblich größere Masse, $m_{15}$, $m_{16}$, aufweist, und zwar mindestens in der Größenordnung der Masse, $m_{20}$, des Gegenschwingers 20. Daher ist beim erfindungsgemäßen Meßwandler vorgesehen, daß der Gegenschwinger 20 und die Ausleger 15, 16 so dimensioniert sind, daß die Masse, $m_{15}$ bzw. $m_{16}$, eines jeden der beiden Ausleger 15, 16 mindestens gleich einer Masse, $m_{20}$, des Gegenschwingers 20 ist. Gemäß einer weiteren Ausgestaltung der Erfindung ist weist jeder der beiden Ausleger 15, 16 eine Masse, $m_{15}$, $m_{16}$, auf, die größer ist als ein 1,5-faches der Masse, $m_{20}$, des Gegenschwingers 20. Erfindungsgemäß muß die Masse, $m_{15}$, $m_{16}$ eines jeden der beiden Ausleger 15, 16 mindestens so groß wie ein 10-faches der Masse, $m_{10}$, des Meßrohrs 10 sein. Ferner konnte hierbei festgestellt werden, daß sich gute Ergebnisse hinsichtlich der Störfestigkeit erzielen lassen, wenn jeder der beiden Ausleger 15, 16 eine Masse, $m_{15}$, $m_{16}$, aufweist, die kleiner ist als ein 5-faches der Masse, $m_{20}$, des Gegenschwingers 20 oder die, zumindest für Meßrohre großer Nennweiten oberhalb von 50 mm, höchsten sogar nur einem 3-fachen der Masse, $m_{20}$, des Gegenschwingers 20 entspricht.

Gemäß einer weiteren Ausgestaltung der Erfindung ist jeder der Ausleger 15, 16 so bemessen, daß eine jeweilige Masse, $m_{15}$, $m_{16}$, mehr als 5 kg, insb. mehr als 10 kg beträgt, insb. aber kleiner als 50 kg ist.

Um eine ausreichend große Masse, $m_{15}$, $m_{16}$, bereitzustellen, ist jeder der Ausleger 15, 16 nach einer weiteren Ausgestaltung der Erfindung so ausgebildet daß er zumindest eine größte Wandstärke aufweist, die größer als eine größte Wandstärke des Gegenschwingers 20 ist. Ferner ist im vorgestellten Ausführungsbeispiel jeder der Ausleger 15, 16 aber auch so dimensioniert, daß er eine kleinste seiner Wandstärken größer als die größte Wandstärke des Gegenschwingers 20 ist, wodurch nicht nur eine entsprechend hohe Masse, $m_{15}$, $m_{16}$ sondern auch eine im Vergleich zu Meßrohr 10 und Gegenschwinger 20 entsprechend hohe Biegesteifigkeit für jeden der Ausleger 15, 16 erzielt werden kann.

Gemäß einer weiteren Ausgestaltung der Erfindung sind zumindest das Meßrohr 10 und die Ausleger 15, 16 aufeinander abgestimmt so bemessen, daß das mit Wasser befüllte Meßrohr 10 eine niedrigste natürliche Eigenfrequenz, $f_{10,H2O}$ aufweist, für die zumindest gilt:

$$f_{10} \geq \frac{1}{2\pi} \cdot \sqrt{\frac{12 \cdot E_{11} \cdot I_{11}/L_{11}^3}{m_{15}}} ,$$

worin $E_{11}$ das Elastizitätsmodul vom Material des Einlaßrohrstücks 11 repräsentiert und $I_{11}$ eine für die Schwingungen des oben bezeichneten Innenteils wirksames oder mittleres axiales Flächenträgheitsmoment des Einlaßrohrstücks 11 ist. Dieses Flächenträgheitsmoment ergibt sich in bekannter Weise gemäß der Beziehung:

$$I_{11} = \frac{\pi}{64}\left[(DN+d)^4 - d^4\right].$$

Dabei entspricht der Ausdruck $E_{11} \cdot I_{11}/L_{11}^3$ praktisch der durch das Einlaßrohrstück 11 bestimmten, für die Schwingungen des Innenteils letzlich maßgebenden Federkonstanten, die zumindest für einen im wesentlichen symmetrischen Aufbau des Innenteils praktisch auch gleich ist der in analoger Weise bestimmten Federkonstante des Auslaßrohrstsücks 12. Insoweit gilt bei im wesentlichen symmetrischem Aufbau gleichermaßen

$$\sqrt{\frac{E_{11} \cdot I_{11}/L_{11}^3}{m_{15}}} = \sqrt{\frac{E_{12} \cdot I_{12}/L_{12}^3}{m_{16}}} .$$

Gemäß einer weiteren Ausgestaltung ist vorgesehen, daß für die Schwingungsfrequenz, $f_{exc}$, im Betrieb mit der das Meßrohr 10 zumindest zeitweise in überwiegendem Maße vibriert, gilt:

$$f_{exc} > \frac{1}{2\pi} \cdot \sqrt{\frac{12 \cdot E_{11} \cdot I_{11}/L_{11}^3}{m_{15}}} .$$

Dadurch sind also das Ein- und das Auslaßrohrstück sowie die Massen, $m_{15}$, $m_{16}$ der Ausleger 15, 16 so aufeinander abgestimmt, daß bereits durch sie eine niedrigste natürliche Eigenfrequenz des Innenteils unterhalb der im Betrieb zu erwartenden von der Dichte des zu messenden Mediums abhängigen Schwingfrequenz, $f_{exc}$, des Meßrohrs 10 definiert ist.

Um dies sowie ein trotzdem möglichst verzögerungsfreies Verdrehen der Ausleger15, 16 und insoweit eine hohe Bandbreite des Entkopplungsmechanismus zu erreichen sind die Ausleger 15 bzw. 16 ferner so geformt und am Meßrohr 10 fixiert, daß ein Quotient der vorgenannten ersten Massenträgheitsmoment , $J_{15x}$, $J_{16x}$, durch die jeweils zugehörige Auslegermasse $m_{15}$ oder $m_{16}$ möglichst klein. Experimentelle Untersuchungen haben hierbei ferner gezeigt, daß sich, insb. auch bei Verwendung von vergleichsweise schweren und insoweit eher trägen Auslegern 15, 16 von beispielsweise jeweils mehr als 10 kg eine vergleichsweise hohe Störfestigkeit des Meßwandlers bei gleichbleibend hoher Dynamik erzielen läßt, wenn der Quotient $J_{15x} / m_{15}$, $J_{16x}/m_{16}$, des jeweiligen Massenträgheitsmoments, $J_{15x}$, $J_{16x}$, eines jeden Auslegers 15, 16 zu dessen jeweiliger Masse, $m_{15}$, $m_{16}$, kleiner gehalten ist als 0,03 $m^2$, insb. in einem Bereich zwischen 0,001 $m^2$ und 0,01 $m^2$ liegt. Weiterführend konnte durch Untersuchung des Schwingungsverhaltens von Meßwandlern der beschriebenen Art verschiedener Nennweiten festgestellt werden, daß sich bezüglich Störfestigkeit und Dynamik gute Ergebnisse erzielen lassen, wenn ein Verhältnis des vorgenannten Quotienten $J_{15x}/m_{15}$, des Auslegers

15 wie auch ein Verhältnis des Quotienten $J_{16x}/m_{16}$, des zweiten Auslegers 16 zu einer Querschnittsfläche des Meßrohrs $A_{10}$ (gemeint ist der Flächeninhalt) möglichst klein, insb. kleiner als 10, gehalten ist. In Anbetracht dessen ist gemäß einer weiteren Ausgestaltung der Erfindung vorgesehen, die Ausleger 15, 16 in Abhängigkeit von der für den tatsächlichen Meßwandler gewählten Nennweite DN des Meßrohrs jeweils so auszuführen und zu dimensionieren, daß durch den Ausleger 15 zumindest die Bedingung $0{,}5 < \dfrac{J_{15x}}{m_{15} \cdot A_{10}} < 5$ und durch den Ausleger 16 zumindest die Bedingung

$$0{,}5 < \frac{J_{16x}}{m_{16} \cdot A_{10}} < 5 \quad \text{erfüllt sind.}$$

Gemäß einer weiteren Ausgestaltung der Erfindung sind die Ausleger 15, 16 ferner so ausgebildete, daß jedes der beiden ersten Massenträgheitsmomente, $J_{15x}$, $J_{16}$, mindestens 0,01 kg $\cdot$ m$^2$ beträgt.

Für den oben erwähnten Fall, daß der Meßwandler in einem Dualmode betrieben werden soll, bei dem das Meßrohr 10 sowohl zumindest zeitweise Biegeschwingungen als auch zumindest zeitweise Torsionsschwingungen ausführt, sind neben dem jeweiligen Massenträgheitsmoment, $J_{15x}$, $J_{16x}$, eines jeden Auslegers 15, 16 um die zugehörige Drehachse, $D_{15x}$, $D_{16x}$, durchaus auch jene zweiten Massenträgheitsmomente, $J_{15z}$, $J_{16z}$, der Ausleger 15, 16 von Interesse, die beschleunigten Verdrehungen derselben um eine jeweils zur Längsachse L im wesentlichen parallele imaginäre Drehachse, $D_{15z}$, $D_{16z}$, entgegenwirken. Für den im Ausführungsbeispiel gezeigten Meßwandler, bei dem die Ausleger sowohl mit Ein- und Auslaßrohrstück als auch mit Meßrohr und Gegenschwinger fluchten, entsprechen die Massenträgheitsmomente, $J_{15z}$, $J_{16z}$, im wesentlichen einem der drei Hauptträgheitsmomente des jeweiligen Auslegers 15, 16 und die Drehachse, $D_{15z}$, $D_{16z}$, im wesentlichen den jeweils zugehörigen Trägheitshauptachsen. Gemäß einer weiteren Ausgestaltung der Erfindung sind die die Ausleger 15, 16 daher so dimensioniert, daß ein Verhältnis, $J_{15x}/J_{15z}$, $J_{16x}/J_{15z}$, des jeweils ersten Massenträgheitsmoments, $J_{15x}$, $J_{16}$, eines jeden Auslegers 15, 16 zu dessen jeweiligen zweiten Massenträgheitsmoment, $J_{15z}$, $J_{16z}$, kleiner als 5, insb. kleiner als 2 ist. Zumindest für den oben beschriebenen Fall, daß jedes der beiden ersten Massenträgheitsmomente, $J_{15x}$, $J_{16x}$, mindestens 0,01 kg $\cdot$ m$^2$ beträgt, sollte also auch jedes der beiden zweiten Massenträgheitsmomente, $J_{15z}$, $J_{16z}$, mindestens etwa 0,01 kg $\cdot$ m$^2$ betragen.

Die Ausleger 15, 16 sind gemäß einer weiteren Ausgestaltung der Erfindung ferner so ausgestaltet, daß sie eine niedrigste Biegesteifigkeit um die jeweilige Drehachse $D_{15x}$, $D_{16x}$, aufweisen, die größer ist als eine vergleichbare Biegesteifigkeit $E_{11} \cdot I_{11}$ des Einlaßrohrstücks 11 und eine entsprechende Biegesteifigkeit $E_{12} \cdot I_{12}$ des Auslaßrohrstücks 12 bezüglich derselben Drehachse $D_{15x}$ bzw. $D_{16x}$. Für den oben erwähnten Fall, daß auch die entsprechende Länge $L_{15}$, $L_{16}$ des jeweiligen Auslegers 15, 16 deutlich kleiner gewählt ist, als die entsprechende Länge, $L_{11}$, des Einlaßrohrstücks 11 und die entsprechende Länge, $L_{12}$, des Auslaßrohrstücks 12, kann so auch ohne weiteres sichergestellt werden, daß die entsprechende Federkonstante jedes der Ausleger 15, 16 stets größer ist als die oben erwähnte, zu $E_{11} \cdot I_{11}/L^3_{11}$ proportionale Federkonstante des Einlaßrohrstücks 11 und die entsprechende Federkonstante ($\sim E_{12} \cdot I_{12}/L^3_{11}$) des Auslaßrohrstücks 12.

Zur optimalen Anpassung der erforderlichen Massen, Massenträgheitsmomente und/oder Biegesteifigkeiten der Ausleger 15, 16 an die, insb. durch Meßrohr 10 und/oder Gegenschwinger 20, tatsächlich vorgegebene Werte können, zusätzlich oder alternativ zur oben erwähnten Ringnut, ferner auch, wie in den Fig. 7a und 7b anhand des Auslegers 15 angedeutet, mit der Längsachse L im wesentlichen fluchtende Längsnuten 15i, 15 j im jeweiligen Ausleger vorgesehen sein.

Wie sich aus den vorangegangenen Erläuterungen unschwer erkennen läßt, zeichnet sich der erfindungsgemäße Meßwandler durch eine Vielzahl von Einstellmöglichkeiten aus, die es dem Fachmann, insb. auch noch nach einer Spezifikation von äußeren oder inneren Einbaumaßen, ermöglichen, eine Kompensation von im Meßrohr 10 und ggf. im Gegenschwinger 20 betriebsbedingt erzeugten Querkräften mit einer hohen Güte zu erzielen. Die vorgenannten Parameter, insb. die Massen, $m_{15}$, $m_{16}$, die ersten und zweiten Trägheitsmomente $J_{15x}$, $J_{16x}$, $J_{15x}$, $J_{16x}$, wie auch die davon abgeleiteten Verhältnisse können dabei ohne weiteres in weiten Grenzen an die durch die für das Meßrohr 10 tatsächlich vorgesehene Nennweite DN wie auch die für den Meßwandler vorgesehene Einbaulänge entsprechend angepaßt werden. Der erfindungsgemäße Meßwandler ist dabei sowohl für Meßrohre mit eher kleineren Nennweiten DN im Bereich von kleiner als 10 mm als auch im besonderen für die Einsatz in Rohrleitung mit einem Kalibier von mehr als 50 mm und damit einhergehend auch für Meßrohre mit Nennweiten von wesentlich größer als 40 mm geeignet.

**Patentansprüche**

1. Meßwandler vom Vibrationstyp für ein in einer Rohrleitung strömendes Medium, welcher Meßwandler umfaßt:

    - ein im Betrieb zumindest zeitweise vibrierendes Meßrohr (10) zum Führen des Mediums, wobei das Meßrohr (10) über ein einlaßseitig einmündendes Einlaßrohrstück (11) und über ein auslaßseitig einmündendes Auslaßrohrstück (12) mit der Rohrleitung kommuniziert;

- einen Gegenschwinger (20), der unter Bildung einer ersten Kopplungszone (11#) einlaßseitig am Meßrohr fixiert ist und der unter Bildung einer zweiten Kopplungszone (12#) auslaßseitig am Meßrohr (10) fixiert ist;
- einen ersten Ausleger (15) zum Erzeugen von Biegemomenten im Einlaßrohrstück (11),

--der im Bereich der ersten Kopplungszone (11#) im wesentlichen starr mit dem Einlaßrohrstück (11) und dem Meßrohr (10) gekoppelt ist; sowie
-- der einen im Bereich des Einlaßrohrstücks (11) liegenden Massenschwerpunkt, $M_{15}$, aufweist, und

- einen zweiten Ausleger (16) zum Erzeugen von Biegemomenten im Auslaßrohrstück (12),

--der im Bereich der zweiten Kopplungszone (12#) im wesentlichen starr mit dem Auslaßrohrstück (11) und dem Meßrohr (10) gekoppelt ist, und
-- der einen im Bereich des Auslaßrohrstücks (12) liegenden Massenschwerpunkt, $M_{16}$,

aufweist;
**dadurch gekennzeichnet, daß**

- eine Masse, $m_{20}$, des Gegenschwingers (20) mindestens einem 5-fachen einer Masse, $m_{10}$, des Meßrohrs (10) entspricht,
- und jeder der beiden Ausleger (15, 16) eine Masse, $m_{15}$, $m_{16}$, aufweist, die mindestens gleich der Masse, $m_{20}$, des Gegenschwingers (20) ist, und die mindestens einem 10-fachen der Masse, $m_{10}$, des Meßrohrs (10) entspricht.

2. Meßwandler nach dem vorherigen Anspruch,

- wobei jeder der beiden Ausleger (15, 16) eine Masse, $m_{15}$, $m_{16}$, aufweist, die größer ist als ein 1,5-faches der Masse, $m_{20}$, des Gegenschwingers (20); und/oder
- wobei jeder der beiden Ausleger (15, 16) eine Masse, $m_{15}$, $m_{16}$, aufweist, die kleiner ist als ein 5-faches der Masse, $m_{20}$, des Gegenschwingers (20).

3. Meßwandler nach einem der vorherigen Ansprüche,

- wobei das Meßrohr (10) zumindest teilweise vom Gegenschwinger (20) ummantelt ist; und/oder
- wobei der, insb. einen Innen-Durchmesser von mehr als 50 mm und/oder eine Wandstärke von mehr als 5 mm aufweisende, Gegenschwinger (20) rohrförmig ist; und/oder
- wobei Meßrohr (10), Einlaßrohrstück (11) und dem Auslaßrohrstück (12) jeweils durch Segmente eines einzigen, einstückigen Rohres gebildet sind; und/oder
- wobei jeder der Ausleger (15, 16) zumindest anteilig unmittelbar am Gegenschwinger (20) fixiert ist; und/oder
- wobei jeder der Ausleger (15, 16) mittels einer auf den Gegenschwinger (20) aufgeschobenen Hülse gebildet ist; und/oder
- wobei jede der Ausleger (15, 16) bildenden Hülsen jeweils wenigstens eine, insb. im wesentlichen koaxial bzw. konzentrisch zu einer Trägheitshauptachse des jeweiligen Auslegers (15, 16) ausgerichtete, Ringnut aufweist; und/oder
- wobei jeder der Ausleger (15, 16) wenigstens eine Längsnut (15i, 15j) aufweist; und/oder
- wobei jeder der Ausleger (15, 16) mittels Schraubverbindungen (15a, 15b, 15c, 15d, 15e, 15f) am Gegenschwinger (20) fixiert ist; und/oder
- wobei das Meßrohr (10) einen Innen-Durchmesser von mehr als 40 mm und/oder eine Wandstärke von mehr als 2 mm aufweist; und/oder
- wobei jeder der beiden Ausleger (15, 16) im wesentlichen röhrenförmig oder hülsenförmig ausgebildet ist; und/oder
- wobei jeder der Ausleger eine größte Wandstärke aufweist, die größer als eine größte Wandstärke des Gegenschwingers (20) ist; und/oder
- wobei jeder der Ausleger (15, 16) eine kleinste Wandstärke aufweist, die größer als eine größte Wandstärke des Gegenschwingers (20) ist; und/oder
- wobei das Meßrohr im Betrieb zumindest zeitweise Biegeschwingungen um eine mit der Längsachse (L) im wesentlichen parallelen, insb. koinzidierenden, Biegeschwingungsachse ausführt; und/oder

- wobei das leere Meßrohr (10) eine niedrigste natürliche Eigenfrequenz, $f_{10}$, aufweist, die größer oder etwa gleich einer niedrigsten natürlichen Eigenfrequenz, $f_{20}$, des Gegenschwingers (20) ist; und/oder

- wobei eine niedrigste natürliche Eigenfrequenz, $f_{10, H2O}$ des mit Wasser gefüllten Meßrohrs (10) mindestens einem 1,1-fachen einer niedrigsten natürlichen Eigenfrequenz, $f_{20}$, des Gegenschwingers (20) entspricht; und/oder

- wobei jeder der beiden Ausleger (15, 16) eine Masse, $m_{15}$, $m_{16}$, aufweist, die höchstens einem 3-fachen der Masse, $m_{20}$, des Gegenschwingers (20) entspricht.

4. Meßwandler nach einem der vorherigen Ansprüche, wobei das Meßrohr (10) im wesentlichen gerade ist.

5. Meßwandler nach dem vorherigen Anspruch,
   wobei Meßrohr (10) und Gegenschwinger (20) zueinander im wesentlichen koaxial ausgerichtet sind; und/oder

   - wobei jeder der Ausleger (15, 16) eine Länge, $L_{15}$, $L_{16}$, aufweist, die höchstens einem 0,5-fachen einer Länge, $L_{10}$, des Meßrohrs (10) entspricht; und/oder
   - wobei jeder der Ausleger (15, 16) eine Länge, $L_{15}$, $L_{16}$, aufweist, die kleiner als ein 0,4-faches einer Länge, $L_{10}$, des Meßrohrs (10) ist; und/oder
   - wobei das Meßrohr im Betrieb zumindest zeitweise Torsionsschwingungen um eine mit der Längsachse (L) im wesentlichen parallelen, insb. koinzidierenden, Torsionsschwingungsachse ausführt.

6. Meßwandler nach einem der vorherigen Ansprüche, wobei das Einlaßrohrstück (11) und Auslaßrohrstück (12) im wesentlichen gerade sind.

7. Meßwandler nach dem vorherigen Anspruch,

   - wobei Einlaßrohrstück (11) und Auslaßrohrstück (12) zueinander sowie zu einer die beiden Kopplungszonen imaginär verbindenden Längsachse (L) des Meßwandlers im wesentlichen fluchtend ausgerichtet sind; und/oder
   - wobei eine Länge $L_{15}$, $L_{16}$, eines jeden der Ausleger (15, 16) höchsten einem 0,9-fachen einer Länge, $L_{11}$, $L_{12}$, des Einlaßrohrstücks (11) oder des Auslaßrohrstücks (12) entspricht; und/oder
   - wobei eine Länge, $L_{11}$, des Einlaßrohrstücks (11) sowie eine Länge, $L_{12}$, des Auslaßrohrstücks (12) jeweils höchstens einem 0,5-fachen einer Länge, $L_{10}$, des Meßrohrs (10) entspricht; und/oder
   - wobei sowohl das Einlaßrohrstück (11) eine Länge, $L_{11}$, als auch das Auslaßrohrstück (12) eine Länge, $L_{12}$, aufweisen, die jeweils kleiner als ein 0,4-faches einer Länge, $L_{10}$, des Meßrohrs (10) ist; und/oder
   - wobei das Meßrohr (10) im Betrieb zumindest zeitweise mit einer Schwingungsfrequenz, $f_{exc}$, vibriert, für die unter Berücksichtigung einer eine Länge, $L_{11}$, des Einlaßrohrstücks (11) sowie einer Biegesteifigkeit $E_{11} \cdot I_{11}$ des Einlaßrohstücks (11) gilt:

$$f_{exc} > \frac{1}{2\pi} \cdot \sqrt{\frac{12 \cdot E_{11} \cdot I_{11} / L_{11}^3}{m_{15}}} .$$

8. Meßwandler nach einem der Ansprüche 4 bis 7, wobei das mit Wasser befüllte Meßrohr (10) eine niedrigste natürliche Eigenfrequenz, $f_{10}$, aufweist, für die unter Berücksichtigung einer Länge, $L_{11}$, des Einlaßrohrstücks (11) sowie einer Biegesteifigkeit $E_{11} \cdot I_{11}$ des Einlaßrohrstücks (11) zumindest gilt:

$$f_{10} \geq \frac{1}{2\pi} \cdot \sqrt{\frac{12 \cdot E_{11} \cdot I_{11} / L_{11}^3}{m_{15}}} .$$

9. Meßwandler nach einem der vorherigen Ansprüche, wobei der erste Ausleger (15) ein erstes Massenträgheitsmoment, $J_{15x}$, um eine in der ersten Kopplungszone liegende imaginäre erste Drehachse, $D_{15x}$, sowie ein zweites Massenträgheitsmoment, $J_{15z}$, um eine zur Meßrohrlängsachse im wesentlichen parallele imaginäre zweite Drehachse, $D_{15z}$, aufweist und wobei der zweite Ausleger (16) ein erstes Massenträgheitsmoment, $J_{16x}$, um eine in der zweiten Kopplungszone liegende, zur ersten Drehachse, $D_{15x}$, im wesentlichen parallele imaginäre zweite Drehachse, $D_{16x}$, sowie ein zweites Massenträgheitsmoment, $J_{16z}$, um eine zur Meßrohrlängsachse im wesentlichen parallele imaginäre zweite Drehachse, $D_{16z}$, aufweist.

**10.** Meßwandler nach dem vorherigen Anspruch,

- wobei ein Verhältnis, $J_{15x}/J_{15z}$, $J_{16x}/J_{15z}$, des ersten Massenträgheitsmoments, $J_{15x}$, $J_{16}$, eines jeden Auslegers (15, 16) zu dessen jeweiligen zweiten Massenträgheitsmoment,$J_{15z}/_{16z}$ kleiner als 5, insb. kleiner als 2 ist; und/oder
- wobei jedes der beiden ersten Massenträgheitsmomente, $J_{15x}$,$J_{16z}$, mindestens 0,01 kg · m$^2$ und/oder wobei jedes der beiden zweiten Massenträgheitsmomente, $J_{15z}$, $J_{16z}$, mindestens 0,01 kg · m$^2$ beträgt; und/oder
- wobei ein Quotient $J_{15x}/m_{15}$,$J_{16x}/m_{16}$, des ersten Massenträgheitsmoments, $J_{15x}$, $J_{16x}$, eines jeden Auslegers (15, 16) zu dessen jeweiliger Masse, $m_{15}$, $m_{16}$, kleiner als 0,03 m$^2$ ist, insb. in einem Bereich zwischen 0,001 m$^2$ und 0,01 m$^2$ liegt.

**11.** Meßwandler nach dem vorherigen Anspruch, wobei ein Verhältnis des Quotienten $J_{15x}/m_{15}$, des ersten Auslegers (15) wie auch ein Verhältnis des Quotienten $J_{16x}/m_{16}$, des zweiten Auslegers (16) zu einer Querschnittsfläche des Meßrohrs $A_{10}$ kleiner als 10 ist.

**12.** Meßwandler nach dem vorherigen Anspruch, wobei der erste Ausleger (15) die Bedingung

$$0,5 < \frac{J_{15x}}{m_{15} \cdot A_{10}} < 5$$

und der zweite Ausleger (16) die Bedingung

$$0,5 < \frac{J_{16x}}{m_{16} \cdot A_{10}} < 5$$

erfüllen.

**13.** Meßwandler nach einem der vorherigen Ansprüche,

- weiters umfassend eine Sensoranordnung (50) zum Erfassen von Schwingungen zumindest des Meßrohrs (10); und/oder
- weiters umfassend eine Erregeranordnung (40) zum Antreiben zumindest des Meßrohrs (10).

**14.** Meßwandler nach einem der vorherigen Ansprüche, wobei das Meßrohr (10) zumindest zeitweise mit einer Schwingungsfrequenz, $f_{exc}$, vibriert, die mindestens einem 1,5-fachen einer niedrigsten natürlichen Eigenfrequenz eines schwingfähigen Innenteils des Meßwandlers entspricht, das zumindest mittels des Meßrohrs (10), des Gegenschwingers (20), des Einlaßrohrstücks (11), des Auslaßrohrstücks (12) sowie der beiden Ausleger (15, 16) gebildet ist.

**15.** Meßwandler nach dem vorherigen Anspruch, wobei die niedrigste natürliche Eigenfrequenz des Innenteils im wesentlichen durch die Massen, $m_{15}$, $m_{16}$, $m_{10}$, $m_{20}$, der Ausleger (15, 16), des Meßrohrs (10) und des Gegenschwingers (20) sowie einer wirksame Biegesteifigkeit des Einlaß- und des Auslaßrohrstücks (11, 12) bestimmt ist, die solchen Verformungen des Einlaß- und Auslaßrohrstücks (11,12) entgegenwirkt, die aus lateralen Verschiebungen der Kopplungszonen aus einer jeweiligen statischen Ruhelage und damit einhergehenden Verdrehungen der Ausleger um ihren jeweiligen Massenschwerpunkt, $M_{15}$, $M_{16}$, resultieren.

**16.** Verwendung eines Meßwandlers gemäß einem der vorherigen Ansprüche in einem In-Line-Meßgerät zum Messen und/oder Überwachen wenigstens eines Parameters, insb. eines Massendurchflusse, $m$, einer Dichte, $\rho$, und/oder einer Viskosität, $\eta$, eines in einer Rohrleitung strömenden Mediums, insb. einem Coriolis-Massendurchflußmeßgerät, einem Dichtemeßgerät, einem Viskositätsmeßgerät oder dergleichen.

**Claims**

**1.** Vibronic-type transducer for a medium flowing through a pipe, said transducer comprising:

- a measuring tube (10) which vibrates at least temporarily during operation and serves to conduct the medium, wherein the measuring tube (10) communicates with the pipe via an inlet pipe piece (11) which opens into the inlet side and via an outlet pipe piece (12) that opens into the outlet side;
- a counter-oscillator (20), which is fixed on the measuring tube on the inlet side forming a first coupling zone (11#) and which is fixed on the measuring tube (10) on the outlet side forming a second coupling zone (12#);
- a first arm (15) designed to generate bending moments in the inlet pipe piece (11),

-- which is coupled with the inlet pipe piece (11) and the measuring tube (10) in an essentially rigid manner in the area of the first coupling zone (11 #), and
-- which has a center of gravity, $M_{15}$, which is situated in the area of the inlet pipe piece (11), and

- a second arm (16) designed to generate bending moments in the outlet pipe piece (12),

-- which is coupled with the outlet pipe piece (11) and the measuring tube (10) in an essentially rigid manner in the area of the second coupling zone (12#), and
-- which has a center of gravity, $M_{16}$, which is situated in the area of the outlet pipe piece (12),

**characterized in that**
a mass, $m_{20}$, of the counter-oscillator (20) corresponds to at least 5 times a mass, $m_{10}$, of the measuring tube (10), and **in that** each of the two arms (15, 16) has a mass, $m_{15}$, $m_{16}$, that is at least equal to the mass, $m_{20}$, of the counter-oscillator (20), and which corresponds to at least 10 times the mass, $m_{10}$, of the measuring tube (10).

2. Transducer as claimed in the previous claim,

- wherein each of the two arms (15, 16) has a mass, $m_{15}$, $m_{16}$, which is greater than 1.5 times the mass, $m_{20}$, of the counter-oscillator (20); and/or
- wherein each of the two arms (15, 16) has a mass, $m_{15}$, $m_{16}$, which is less than 5 times the mass, $m_{20}$, of the counter-oscillator (20).

3. Transducer as claimed in one of the previous claims,

- wherein the measuring tube (10) is at least partially covered by the counter-oscillator (20); and/or
- wherein the counter-oscillator (20), which has, in particular, an inner diameter of more than 50 mm and/or a wall thickness of more than 5 mm, is tubular in shape; and/or
- wherein the measuring tube (10), inlet pipe piece (11) and outlet pipe piece (12) are each formed by segments of a single, one-piece pipe; and/or
- wherein each of the arms (15, 16) is fixed, at least in part, directly on the counter-oscillator (20); and/or
- wherein each of the arms (15, 16) is formed by means of a sleeve pushed onto the counter-oscillator (20); and/or
- wherein each of the sleeves forming the arms (15, 16) has at least one annular groove which is essentially aligned in a coaxial or concentric manner in relation to a main axis of inertia of the particular arm (15, 16); and/or
- wherein each the arms (15, 16) has at least a longitudinal groove (15i, 15j); and/or
- wherein each of the arms (15, 16) is fixed on the counter-oscillator (20) by means of screw connections (15a, 15b, 15c, 15d, 15e, 15f); and/or
- wherein the measuring tube (10) has an inner diameter of more than 40 mm and/or a wall thickness of more than 2 mm; and/or
- wherein each of the two arms (15, 16) is essentially designed in the shape of a tube or sleeve; and/or
- wherein each of the arms (15, 16) has a maximum wall thickness, which is greater than a maximum wall thickness of the counter-oscillator (20); and/or
- wherein each of the arms (15, 16) has a minimum wall thickness, which is greater than a maximum wall thickness of the counter-oscillator (20); and/or
- wherein, during operation, the measuring tube at least temporarily executes flexural vibrations around a flexural vibration axis which is essentially parallel to, particularly coinciding with, the longitudinal axis (L); and/or
- wherein the empty measuring tube (10) has a lowest natural frequency, $f_{10}$, which is greater than or roughly equal to a lowest natural frequency, $f_{20}$, of the counter-oscillator (20); and/or
- wherein a lowest natural frequency, $f_{10,\,H2O}$ of the measuring tube (10) filled with water corresponds at least to 1.1 times a lowest natural frequency, $f_{20}$, of the counter-oscillator (20); and/or
- wherein each of the two arms (15, 16) has a mass, $m_{15}$, $m_{16}$, which corresponds at maximum to 3 times the mass, $m_{20}$, of the counter-oscillator (20).

4. Transducer as claimed in one of the previous claims, wherein the measuring tube (10) is essentially straight.

5. Transducer as claimed in the previous claim,

- wherein the measuring tube (10) and the counter-oscillator (20) are aligned with one another in an essentially coaxial manner; and/or
- wherein each of the arms (15, 16) has a length, $L_{15}$, $L_{16}$, which corresponds at maximum to 0.5 times a length, $L_{10}$, of the measuring tube (10); and/or
- wherein each of the arms (15, 16) has a length, $L_{15}$, $L_{16}$, which is less than 0.4 times a length, $L_{10}$, of the measuring tube (10); and/or
- wherein, during operation, the measuring tube at least temporarily executes torsional vibrations around a torsional axis of oscillation which is essentially parallel to, particularly coinciding with, the longitudinal axis (L).

6. Transducer as claimed in one of the previous claims, wherein the inlet pipe piece (11) and the outlet pipe piece (12) are essentially straight.

7. Transducer as claimed in the previous claim,

- wherein the inlet pipe piece (11) and the outlet pipe piece (12) are aligned in an essentially flush manner in relation to one another and in relation to a longitudinal axis (L) which connects the two coupling zones in an imaginary manner; and/or
- wherein a length $L_{15}$, $L_{16}$ of each of the arms (15, 16) corresponds at maximum to 0.9 times a length, $L_{11}$, $L_{12}$, of the inlet pipe piece (11) or the outlet pipe piece (12); and/or
- wherein a length, $L_{11}$, of the inlet pipe piece (11) and a length, $L_{12}$, of the outlet pipe piece (12) in each case corresponds at maximum to 0.5 times the length, $L_{10}$, of the measuring tube (10); and/or
- wherein both the inlet pipe piece (11) has a length, $L_{11}$, and the outlet pipe piece (12) has a length, $L_{12}$, which in each case is smaller than 0.4 times a length, $L_{10}$, of the measuring tube (10) ;

and/or

- wherein, during operation, the measuring tube (10) vibrates at least temporarily at a vibration frequency, $f_{exc}$, for which the following formula applies taking into account a length, $L_{11}$, of the inlet pipe piece (11) and a flexural rigidity $E_{11} \cdot I_{11}$ of the inlet pipe piece (11):

$$f_{exc} > (1 / 2\pi) \cdot \text{ROOT} [(12 \cdot E_{11} \cdot I_{11}/L^3_{11})/m_{15}]$$

8. Transducer as claimed in one of the Claims 4 to 7, wherein the measuring tube (10) filled with water has a lowest natural frequency, $f_{10}$, for which the following formula applies at least taking into account a length, $L_{11}$, of the inlet pipe piece (11) and a flexural rigidity $E_{11} \cdot I_{11}$ of the inlet pipe piece (11) :

$$f_{10} \geq (1 / 2\pi) \cdot \text{ROOT} [(12 \cdot E_{11} \cdot I_{11}/L^3_{11})/m_{15}]$$

9. Transducer as claimed in one of the previous claims, wherein the first arm (15) has a first moment of inertia, $J_{15x}$, around a first imaginary axis of rotation, $D_{15x}$, located in the first coupling zone, as well as a second moment of inertia, $J_{15z}$, around a second imaginary axis of rotation, $D_{15z}$, which is essentially parallel to the longitudinal axis of the measuring tube, and wherein the second arm (16) has a first moment of inertia, $J_{16x}$, around a second imaginary axis of rotation, $D_{16x}$, which is essentially parallel to the first axis of rotation, $D_{15x}$, located in the second coupling zone, as well as a second moment of inertia, $J_{16z}$, around a second imaginary axis of rotation, $D_{16z}$, which is essentially parallel to the longitudinal axis of the measuring tube.

10. Transducer as claimed in the previous claim,

- wherein a ratio, $J_{15x}/J_{15z}$, $J_{16x}/J_{15z}$, between the first moment of inertia $J_{15x}$, $J_{16}$ of each arm (15, 16) and its second corresponding moment of inertia $J_{15z}$, $J_{16z}$ is less than 5, particularly less than 2; and/or
- wherein each of the two first moments of inertia $J_{15x}$, $J_{16x}$, is at least 0.01 kg $\cdot$ m$^2$ and/or wherein each of the two second moments of inertia $J_{15z}$, $J_{16z}$, is at least $0.01 \, kg \cdot m^2$ ;

and/or

- wherein a quotient $J_{15x}/m_{15}$, $J_{16x}/m_{16}$, of the first moment of inertia $J_{15x}$, $J_{16x}$ of each arm (15, 16) to its respective mass $m_{15}$, $m_{16}$, is smaller than $0.03 \, m^2$, and is particularly in a range between $0.001 \, m^2$ and $0.01 \, m^2$.

11. Transducer as claimed in the previous claim, wherein a ratio between the quotient $J_{15x}/m_{15}$, of the first arm (15) as well as a ratio between the quotient $J_{16x}/m_{16}$, of the second arm (16) to a cross-sectional area of the measuring tube $A_{10}$ is less than 10.

12. Transducer as claimed in the previous claim, wherein the first arm (15) meets the condition

$$0.5 < J_{15x} / (m_{15} \cdot A_{10}) < 5$$

and the second arm (16) meets the condition

$$0.5 < J_{16x} / (m_{16} \cdot A_{10}) < 5.$$

13. Transducer as claimed in one of the previous claims,

- further comprising a sensor arrangement (50) for recording vibrations of at least the measuring tube (10); and/or
- further comprising an exciter arrangement (40) for exciting at least the measuring tube (10).

14. Transducer as claimed in one of the previous claims, wherein the measuring tube (10) vibrates at least temporarily at a vibration frequency, $f_{exc}$, which corresponds to at least 1.5 times a lowest natural frequency of an internal part of the transducer that is capable of vibrating, which is formed by at least the measuring tube (10), the counter-oscillator (20), the inlet pipe piece (11), the outlet pipe piece (12) and the two arms (15, 16).

15. Transducer as claimed in the previous claim, wherein the lowest natural frequency of the internal part is essentially determined by the masses $m_{15}$, $m_{16}$ $m_{10}$, $m_{20}$, of the arms (15, 16), the measuring tube (10) and the counter-oscillator (20) and by an effective flexural rigidity of the inlet and outlet pipe piece (11, 12), which acts against such deformations of the inlet and outlet pipe piece (11, 12) that result from lateral shifts of the coupling zones from a static rest position and associated twisting of the arms around their respective center of gravity, $M_{15}$, $M_{16}$.

16. Use of a transducer as claimed in one of the previous claims in an in-line measuring device to measure and/or monitor at least one parameter, particularly a mass flow, m, a density, p, and/or a viscosity, η, of a medium flowing in a pipe, particularly a Coriolis mass flowmeter, a density meter, a viscosity meter or similar.


**Revendications**

1. Transducteur du type vibratoire pour un produit s'écoulant dans une conduite, lequel transducteur comprend :

- un tube de mesure (10) vibrant au moins temporairement en fonctionnement, destiné à guider le produit, le tube de mesure (10) communiquant avec la conduite par l'intermédiaire d'un élément de tube d'entrée (11) débouchant côté entrée et par l'intermédiaire d'un élément de tube de sortie (12) débouchant côté sortie ;
- un contre-vibrateur (20), qui est fixé côté entrée sur le tube de mesure en formant une première zone de couplage (11#) et qui est fixé côté sortie sur le tube de mesure en formant une deuxième zone de couplage (12#) ;
- un premier bras (15) destiné à générer des moments de flexion dans l'élément de tube d'entrée (11),

-- qui est couplé au niveau de la première zone de couplage (11#) pour l'essentiel de façon rigide avec l'élément de tube d'entrée (11) et le tube de mesure (10), et
-- qui présente un centre de gravité, $M_{15}$, qui se situe dans la zone de l'élément de tube d'entrée (11), et

- un deuxième bras (16) destiné à générer des moments de flexion dans l'élément de tube de sortie (12),

-- qui est couplé au niveau de la deuxième zone de couplage (12#) pour l'essentiel de façon rigide avec l'élément de tube de sortie (11) et le tube de mesure (10), et

-- qui présente un centre de gravité, $M_{16}$, qui se situe dans la zone de l'élément de tube de sortie (12),

**caractérisé**

**en ce qu'**une masse, $m_{20}$, du contre-vibrateur (20) correspond au moins à 5 fois une masse, $m_{10}$, du tube de mesure (10),

et **en ce que** chacun des deux bras (15, 16) présente une masse, $m_{15}$, $m_{16}$, qui est au moins égale à la masse, $m_{20}$, du contre-vibrateur (20), et qui correspond à au moins 10 fois la masse, $m_{10}$, du tube de mesure (10).

2. Transducteur selon la revendication précédente,

- pour lequel chacun des deux bras (15, 16) présente une masse, $m_{15}$, $m_{16}$, qui est supérieure à 1,5 fois la masse, $m_{20}$, du contre-vibrateur (20) ; et/ou
- pour lequel chacun des deux bras (15, 16) présente une masse, $m_{15}$, $m_{16}$, qui est inférieure à 5 fois la masse, $m_{20}$, du contre-vibrateur (20).

3. Transducteur selon l'une des revendications précédentes,

- pour lequel le tube de mesure (10) est entouré au moins partiellement par le contre-vibrateur (20); et/ou
- pour lequel le contre-vibrateur (20), présentant notamment un diamètre intérieur supérieur à 50 mm et/ou une épaisseur de paroi supérieure à 5 mm, est de forme tubulaire ; et/ou
- pour lequel le tube de mesure (10), l'élément de tube d'entrée (11) et l'élément de tube de sortie (12) sont chacun constitués de segments d'un unique tube monopièce ; et/ou
- pour lequel chacun des bras (15, 16) est fixé au moins partiellement directement sur le contre-vibrateur (20) ; et/ou
- pour lequel chacun des bras (15, 16) est constitué d'une douille enfilée sur le contre-vibrateur (20) ; et/ou
- pour lequel chacune des douilles formant les bras (15, 16) comprend au moins une rainure annulaire alignée pour l'essentiel de façon coaxiale ou concentrique par rapport à un axe principal d'inertie du bras (15, 16) respectif ; et/ou
- pour lequel chacun des bras (15, 16) présente au moins une rainure longitudinale (15i, 15j) ; et/ou
- pour lequel chacun des bras (15, 16) est fixé au moyen d'assemblages vissés (15a, 15b, 15c, 15d, 15e, 15f) sur le contre-vibrateur (20) ; et/ou
- pour lequel le tube de mesure (10) présente un diamètre intérieur supérieur à 40 mm et/ou une épaisseur de paroi supérieure à 2 mm ; et/ou
- pour lequel chacun des bras (15, 16) est conçu pour l'essentiel en forme de tube ou en forme de douille ; et/ou
- pour lequel chacun des bras (15, 16) présente une épaisseur de paroi maximale, qui est supérieure à l'épaisseur de paroi maximale du contre-vibrateur (20) ; et/ou
- pour lequel chacun des bras (15, 16) présente une épaisseur de paroi minimale, qui est supérieure à l'épaisseur de paroi maximale du contre-vibrateur (20) ; et/ou
- pour lequel le tube de mesure exécute en fonctionnement au moins temporairement des vibrations de flexion autour d'un axe de vibration de flexion pour l'essentiel parallèle, notamment coïncidant, avec l'axe longitudinal (L) ; et/ou
- pour lequel le tube de mesure (10) vide présente une fréquence propre naturelle minimale, $f_{10}$, qui est supérieure ou égale à une fréquence propre naturelle minimale, $f_{20}$, du contre-vibrateur (20) ; et/ou
- pour lequel une fréquence propre naturelle minimale, $f_{10, H20}$ du tube de mesure (10) rempli d'eau correspond au moins à 1,1 fois une fréquence propre naturelle minimale, $f_{20}$, du contre-vibrateur (20) ; et/ou
- pour lequel chacun des deux bras (15, 16) présente une masse, $m_{15}$, $m_{16}$, qui correspond au maximum à 3 fois la masse, $m_{20}$, du contre-vibrateur (20).

4. Transducteur selon l'une des revendications précédentes, pour lequel le tube de mesure (10) est pour l'essentiel droit.

5. Transducteur selon la revendication précédente,

- pour lequel le tube de mesure (10) et le contre-vibrateur (20) sont alignés pour l'essentiel de façon coaxiale l'un par rapport à l'autre ; et/ou

- pour lequel chacun des bras (15, 16) présente une longueur, $L_{15}$, $L_{16}$, qui correspond au maximum à 0,5 fois une longueur, $L_{10}$, du tube de mesure (10) ;

et/ou

- pour lequel chacun des bras (15, 16) présente une longueur, $L_{15}$, $L_{16}$, qui est inférieure à 0,4 fois une longueur, $L_{10}$, du tube de mesure (10) ; et/ou
- pour lequel le tube de mesure exécute en fonctionnement au moins temporairement des vibrations torsionnelles autour d'un axe de vibration torsionnelle pour l'essentiel parallèle, notamment coïncidant, avec l'axe longitudinal (L).

6. Transducteur selon l'une des revendications précédentes, pour lequel l'élément de tube d'entrée (11) et l'élément de tube de sortie (12) sont pour l'essentiel droits.

7. Transducteur selon la revendication précédente,

- pour lequel l'élément de tube d'entrée (11) et l'élément de tube de sortie (12) sont alignés pour l'essentiel de façon affleurante l'un par rapport à l'autre, ainsi que par rapport à un axe longitudinal (L) reliant de façon imaginaire les deux zones de couplage ; et/ou
- pour lequel une longueur $L_{15}$, $L_{16}$ de chacun des bras (15, 16) correspond au maximum à 0,9 fois une longueur, $L_{11}$, $L_{12}$, de l'élément de tube d'entrée (11) ou de l'élément de tube de sortie (12) ; et/ou
- pour lequel une longueur, $L_{11}$, de l'élément de tube d'entrée (11) ainsi qu'une longueur, $L_{12}$, de l'élément de tube de sortie (12) correspond au maximum à 0,5 fois une longueur, $L_{10}$, du tube de mesure (10) ; et/ou
- pour lequel à la fois l'élément de tube d'entrée (11) présente une longueur, $L_{11}$, et l'élément de tube de sortie (12) une longueur, $L_{12}$, qui est chacune inférieure à 0,4 fois une longueur, $L_{10}$, du tube de mesure (10) ;

et/ou

- pour lequel le tube de mesure (10) vibre en fonctionnement au moins temporairement à une fréquence de vibration, $f_{exc}$, pour laquelle s'applique la formule suivante, en tenant compte d'une longueur, $L_{11}$, de l'élément de tube d'entrée (11) ainsi que d'une rigidité à la flexion $E_{11} \cdot I_{11}$ de l'élément de tube d'entrée (11) :

$$f_{exc} > (1 / 2\pi) \cdot \text{ROOT} \left[ (12 \cdot E_{11} \cdot I_{11}/L^3_{11})/m_{15} \right]$$

8. Transducteur selon l'une des revendications 4 à 7, pour lequel le tube de mesure (10) rempli d'eau présente une fréquence propre naturelle minimale, $f_{10}$, pour laquelle s'applique la formule suivante, en tenant compte d'une longueur, $L_{11}$, de l'élément de tube d'entrée (11) ainsi que d'une rigidité à la flexion $E_{11} \cdot I_{11}$ de l'élément de tube d'entrée (11) :

$$f_{10} \geq (1 / 2\pi) \cdot \text{ROOT} \left[ (12 \cdot E_{11} \cdot I_{11}/L^3_{11})/m_{15} \right]$$

9. Transducteur selon l'une des revendications précédentes, pour lequel le premier bras (15) présente un premier moment d'inertie, $J_{15x}$, autour d'un premier axe de rotation, $D_{15x}$, imaginaire, situé dans la première zone de couplage, ainsi qu'un deuxième moment d'inertie, $J_{15z}$, autour d'un deuxième axe de rotation, $D_{15z}$, imaginaire, pour l'essentiel parallèle à l'axe longitudinal du tube de mesure, et pour lequel le deuxième bras (16) présente un premier moment d'inertie, $J_{16x}$, autour d'un deuxième axe de rotation, $D_{16x}$, imaginaire, pour l'essentiel parallèle au premier axe de rotation, $D_{15x}$, imaginaire, situé dans la deuxième zone de couplage, ainsi qu'un deuxième moment d'inertie, $J_{16z}$, autour d'un deuxième axe de rotation, $D_{16z}$, imaginaire, pour l'essentiel parallèle à l'axe longitudinal du tube de mesure.

10. Transducteur selon la revendication précédente,

- pour lequel un rapport, $J_{15x}/J_{15z}$, $J_{16x}/J_{15z}$, entre le premier moment d'inertie $J_{15x}$, $J_{16}$ de chaque bras (15, 16) et son deuxième moment d'inertie $J_{15z}$, $J_{16z}$ correspondant est inférieur à 5, notamment inférieur à 2 ; et/ou
- pour lequel chacun des deux premiers moments d'inertie $J_{15x}$, $J_{16x}$, est au moins égal à 0,01 kg · m² et/ou pour lequel chacun des deux deuxièmes moments d'inertie $J_{15z}$, $J_{16z}$, est au moins égal à 0,01 kg · m$^2$ ;

et/ou

- pour lequel un quotient $J_{15x}/m_{15}$, $J_{16x}/m_{16}$, du premier moment d'inertie $J_{15x}$, $J_{16x}$ de chaque bras (15, 16) et sa masse $m_{15}$, $m_{16}$, respective est inférieur à 0,03 m$^2$, notamment dans une plage comprise entre 0,001 m$^2$ et 0,01 m$^2$.

11. Transducteur selon la revendication précédente, pour lequel un rapport entre le quotient $J_{15x}/m_{15}$, du premier bras (15) tout comme un rapport entre le quotient $J_{16x}/m_{16}$, du deuxième bras (16) et une superficie de section du tube de mesure $A_{10}$ est inférieur à 10.

12. Transducteur selon la revendication précédente, pour lequel le premier bras (15) remplit la condition

$$0,5 < J_{15x} / (m_{15} \cdot A_{10}) < 5$$

et le deuxième bras (16) la condition

$$0,5 < J_{16x} / (m_{16} \cdot A_{10}) < 5.$$

13. Transducteur selon l'une des revendications précédentes,

- comprenant en outre un ensemble capteur (50) destiné à la mesure des vibrations au moins du tube de mesure (10); et/ou
- comprenant en outre un ensemble excitateur (40) destiné à exciter au moins le tube de mesure (10).

14. Transducteur selon l'une des revendications précédentes, pour lequel le tube de mesure (10) vibre au moins temporairement à une fréquence de vibration, $f_{exc}$, qui correspond à au moins 1,5 fois une fréquence propre naturelle inférieure d'une partie intérieure apte à vibrer du transducteur, laquelle est formée au moins du tube de mesure (10), du contre-vibrateur (20), de l'élément de tube d'entrée (11), de l'élément de tube de sortie (12) ainsi que des deux bras (15, 16).

15. Transducteur selon la revendication précédente, pour lequel la fréquence propre naturelle minimale de la partie intérieure est déterminée pour l'essentiel par les masses $m_{15}$, $m_{16}$ $m_{10}$, $m_{20}$, des bras (15, 16), du tube de mesure (10) et du contre-vibrateur (20) ainsi que par une rigidité à la flexion active des éléments de tube d'entrée et de sortie (11, 12), qui agit contre de telles déformations des éléments de tube d'entrée et de sortie (11, 12), qui résultent de décalages latéraux des zones de couplage à partir d'une position de repos statique et, ainsi, des déformations consécutives des bras autour de leur centre de gravité, $M_{15}$, $M_{16}$, respectif.

16. Utilisation d'un transducteur selon l'une des revendications précédentes dans un appareil de mesure en ligne destiné à la mesure et/ou la surveillance d'au moins un paramètre, notamment un débit massique, m, une densité, p, une viscosité, η, d'un produit s'écoulant dans une conduite, notamment un débitmètre massique Coriolis, un densimètre, un viscosimètre, etc.

Fig. 1

Fig. 2

Fig. 3

Fig. 4

Fig. 5

EP 1 949 048 B1

Fig. 6a

Fig. 6b

Fig. 6c

Fig. 6d

26

Fig. 7a          Fig. 7b

Fig. 8

**EP 1 949 048 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 317340 A
- US 5398554 A
- US 5476013 A
- US 5531126 A
- US 5691485 A
- US 5705754 A
- US 5796012 A
- US 5945609 A
- US 5979246 A
- US 6006609 A
- US 6397685 B
- US 6691583 B
- US 6840109 B
- WO 9951946 A
- WO 9940394 A
- WO 0014485 A
- US 5969265 A
- US 5287754 A
- US 5796010 A
- US 6948379 B
- EP 1253408 A
- DE 10235322 A